# EUROPÄISCHE PATENTANMELDUNG

(11) **EP 2 913 184 A2**
(43) Veröffentlichungstag der Anmeldung: **02.09.2015**
(21) Anmeldenummer: 15000483.6
(22) Anmeldetag: 19.02.2015
(51) Int. Cl.: B32B 37/00, B32B 37/12, B29C 63/00, C09J 7/02

(54) **Verfahren zum Aufbringen eines Klebers auf eine Kaschierfolie, Verfahren zum Kaschieren eines Trägerteils und Kaschieranlage**

(30) Priorität: 26.02.2014 DE 102014002568
(71) Anmelder: KIEFEL GmbH, 83395 Freilassing (DE)
(72) Erfinder: Dandl, Andreas, 83410 Laufen (DE)
(74) Vertreter: Farago, Peter Andreas

(57) **Zusammenfassung**

Die Erfindung betrifft ein Verfahren zum Versehen einer Kaschierfolie mit Klebstoff als vorbereitender Verfahrensschritt zum Herstellen eines kaschierten Formteils mittels eines Trägerteils, ein Verfahren zum Auftragen eines Hotmelts auf eine Kaschierfolie, ein Verfahren zum Herstellen eines kaschierten Formteils, die Verwendung eines Verfahrens, eine Anlage zum Kaschieren eines Trägerteils sowie ein Verfahren zum Umrüsten einer solchen Anlage.

Die Erfindung hat erkannt, dass besonders hoch qualitative Kaschierungen erzeugt werden können, und dies selbst dann, wenn das Trägerteil, auf welches die Kaschierfolie aufkaschiert werden soll, nicht porös ist, wenn der Klebstoff zum Verbinden der Kaschierfolie mit dem Trägerteil makroskopisch strukturiert aufgetragen wird, so dass sich ein Kanalsystem ergibt. Durch das Kanalsystem kann die Luft zwischen der Kaschierfolie und dem Trägerteil während des Kaschierens abströmen.

## Beschreibung

Die vorliegende Erfindung betrifft ein Verfahren zum Versehen einer Kaschierfolie mit Klebstoff, ein Verfahren zum Auftragen eines Hotmelts auf eine Kaschierfolie, die Verwendung eines solchen Verfahrens, eine Anlage zum Kaschieren eines Trägerteils mit einer Kaschierfolie sowie ein Verfahren zum Umrüsten einer Anlage.

Insbesondere betrifft die Erfindung ein Verfahren zum Kaschieren von Bauteilen mit Folien, wobei ein Klebstoff rasterförmig so auf die Oberfläche der Kaschierfolie und/oder des Bauteils aufgetragen wird, dass nach dem zusammenfügen der Folie und des Bauteils der Klebstoff zwischen der Folie und dem Bauteil angeordnet ist und die Bereiche zwischen den Klebstoffauftragungen ein Kanalsystem bilden, welches den gleichmäßigen Abtransport (Entfernen der Luft durch Abziehen und/oder Herauspressen) der zwischen dem Bauteil und der Folie befindlichen Luft gewährleistet.

Weiterhin betrifft die Erfindung ein kaschiertes Formteil, welches durch das oben genannte Verfahren erhältlich ist sowie die Verwendung eines zwischen einem Bauteil und einer Kaschierfolie angeordneten Klebstoffrasters zur Reduzierung oder Vermeidung von Lufteinschlüssen bei der Kaschierung des Bauteils mit der Kaschierfolie.

Die Kaschierung von Bauteilen mittels Anlegen eines Unterdruck bzw. Vakuums wie z.B. Vakuumkaschieren oder Varianten wie das In-Mould-Graining (IMG)-Verfahren und/oder mittels Pressdrucks sind in der Industrie weit verbreitet.

Bei vakuumunterstützten Kaschiererfahren wird im Allgemeinen ein luftundurchlässiges bzw. begrenzt luftundurchlässiges Material (z.B. eine Dekorfolie) auf ein festes Bauteil kaschiert. Der verwendete Klebstoff kann dabei als Vorbeschichtung auf der Folie oder dem Bauteil aufgebracht sein.

Die Folie kann in diesem Prozess erwärmt und dann mittels Anlegen eines Unterdrucks auf das Bauteil aufgebracht werden. Die für die Folienverformung notwendige Wärmeenergie kann dabei auch zur Aktivierung des Klebstoffes genutzt werden. Eine entscheidende Bedingung für den Prozess ist die Luftdurchlässigkeit (Vakuumfähigkeit) des zu kaschierenden Substrates (Bauteils) in Kombination mit einer luftundurchlässigen Folie. Letzteres kann beispielsweise auch durch eine zusätzliche Membrane erreicht werden.

Während die Vakuumfähigkeit bei porösen Stoffen wie zum Beispiel Holzwerkstoffen oder offenporigen Verbundwerkstoffen in der Regel gegeben ist, sind bei luftundurchlässigen Bauteilmaterialien, wie sie typischerweise im Spritzgussverfahren hergestellt werden, oder begrenzt luftdurchlässigen Bauteilmaterialien, wie zum Beispiel bei bestimmten Faserverbundstoffen, besondere Vorkehrungen zu treffen. Hierzu zählen üblicherweise das Einbringen von Vakuumlöchern und das Aufbringen einer Kaschiernarbung auf das Bauteil, welche ein Absaugen der zwischen Folie und Bauteil befindlichen Luft ermöglicht. Durch die Kaschiernarbung entstehen Narbgräben im Bauteil über welchen die zwischen Bauteil und Folie befindliche Luft abgezogen werden kann.

Die Vakuumlöcher ermöglichen das Entweichen der Luft zwischen Folie und Bauteil durch Anlegen eines Unterdrucks bzw. Vakuums. Dies ist jedoch oft nicht ausreichend um klein- bis mittelgroße Lufteinschlüsse zu vermeiden. Diese können z.B. durch die Geometrie der Bauteile, aber auch durch den Ablegeprozess der Folie und die begrenzte Kapazität der Vakuumlöcher entstehen. Daher wird im Stand der Technik üblicherweise zusätzlich eine Kaschiernarbung auf das Bauteil aufgebracht, die auch nach dem "Erstkontakt" der Folie mit dem Bauteil einen weiteren Lufttransport durch die Gräben der Narbung zu den Löchern ermöglicht. Das Aufbringen dieser Kaschiernarbung auf das Bauteil ist jedoch technisch aufwändig und kostenintensiv, zumal eine ausreichende Narbung typischerweise 0,2 bis 0,3 mm Tiefe benötigt, was zu einem entsprechend höheren Materialeinsatz führt und auch das Gesamtgewicht des Bauteils erhöht. Dies kann bis zu 10 Gewichts-% des Bauteilgewichtes betreffen.

Im Automobilbereich, insbesondere für Bauteile der Inneneinrichtung von Fahrzeugen, also für die hier bevorzugte Anwendung, kommen in der Praxis typischerweise zwei verschiedene Prozesse für die Folienkaschierung zum Einsatz.

In einem ersten Verfahren erfolgt der Klebstoffauftrag durch Sprühen auf das Bauteil. Hierbei muss ein lackartiger Klebstoffauftrag vermieden werden, da dieser zu einem Verstopfen der Vakuumlöcher durch den Klebstoff (z.B. bei Verwendung eines Dispersions- oder Lösemittelklebstoffs) führen kann.

In einem alternativen Verfahren erfolgt der Klebstoffauftrag (z.B. eines Schmelzklebstoffs) auf die Folie. Hierbei wird der Schmelzklebstoff mit der Folie auf die notwendige folientypische Verformtemperatur (je nach Folie 120 °C bis 210 °C) erwärmt und damit aktiviert.

Bei letztgenanntem Prozess ist der Klebstoff (in der Regel ein reaktiver oder thermoplastischer Schmelzklebstoff) viskos-flüssig. Das gilt auch noch beim Vakuumfügeprozess. Der zähflüssige Klebstoff kann dabei aufgrund seiner Fließfähigkeit sehr leicht die Vakuumlöcher oder die Narbgräben verschließen. Dies verhindert den gleichmäßigen Abzug der Luft und kann somit die Bildung von Lufteinschlüssen begünstigen. Dies führt im fertigen kaschierten Formteil zu sichtbaren aber auch unsichtbaren Fehlstellen.

Tatsächlich ist dem Fachmann bekannt, dass diese Art von Fehlstellen, die durch Lufteinschlüsse entstehen, bei der Verwendung von Schmelzklebstoffen häufig eintritt und die Ansprüche an die Narbqualität und Tiefe sowie Anzahl der Löcher höher sind als beim erstgenannten Prozess, in welchem der Klebstoff auf das Bauteil aufgesprüht wird.

Aufgabe der vorliegenden Erfindung ist es, dem Stand der Technik eine Alternative oder Verbesserung zur Verfügung zu stellen.

Nach einem ersten Aspekt der vorliegenden Erfindung löst die gestellte Aufgabe ein Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten (a) Auftragen des Klebstoffs auf die B-Seite; und (b) anschließendes Umformen des Klebstoffs durch Prägen eines Rasters in den Klebstoff, so dass mit dem Raster Kanäle gebildet werden, bevor der Klebstoff mit der Oberfläche des Trägerteils verbunden wird.

Begrifflich sei hierzu folgendes erläutert:

Die "Kaschierfolie" kann eine Kunststofffolie sein, vorzugsweise eine Kunststofffolie auf Basis von Polyvinylchlorid (PVC), Polyolefinen, thermoplastischen Polyolefinen (TPO), Polycarbonat, Polyether, Polyestern, Polyurethanen, Poly(meth)acrylat, oder Kombinationen Co- und Terpolymeren derselben. Aber auch andere (Dekor-)Materialen sind geeignet wie zum Beispiel Schaumfolien, Textilien, Metallfolien, Echtleder, Kunstleder und Schichtverbundstoffe aus verschiedenen der oben genannten Materialien. Die Luftundurchlässigkeit kann hierbei durch den Einsatz von zusätzlichen Membrane erreicht werden.

Die Kaschierfolie weist bevorzugt eine Dicke im Bereich von 0,1 mm oder mehr und 7,0 mm oder weniger, vorzugsweise 1,0 mm oder mehr und 3,5 mm oder weniger, noch bevorzugter 1,5 mm oder mehr und 2,5 mm oder weniger auf.

Die Kunststofffolien umfassen insbesondere Folien auf Basis von Polyolefinen wie Polyethylen und Polypropylen. Weiterhin sind Folien auf Basis von Polyester, Polyamid, Polycarbonat, Polyvinylchlorid, Polymethylmethacrylat und Polystyrol bevorzugt. Unter Polyolefinen wie Polyethylen und Polypropylen werden hier nicht nur die betreffenden Ethylen- und Propylerihomopolymere, sondern auch Copolymere mit anderen Olefinen wie beispielsweise Acrylsäure oder 1-Olefinen verstanden. So sind unter Polyethylen insbesondere Ethylencopolymere mit 0,1 bis unter 50 Gew.-% eines oder mehrerer Olefine wie Propylen, 1-Buten, 1-Penten, 1-Hexen, 1-0cten, 1-Decen oder 1- Dodecen zu verstehen, wobei Propylen, 1-Buten und 1-Hexen bevorzugt sind. Unter Polypropylen sind insbesondere auch Propylencopolymere mit 0,1 bis unter 50 Gew.-% Ethylen und/oder eines oder mehrerer 1-Olefine wie 1- Buten, 1-Penten, 1-Hexen, 1-0cten, 1-Decen oder 1-Dodecen zu verstehen, wobei Ethylen, 1-Buten und 1-Hexen bevorzugt sind. Unter Polypropylen ist dabei bevorzugt im Wesentlichen isotaktisches Polypropylen zu verstehen.

Folien aus Polyethylen können aus HDPE oder LDPE oder LLDPE hergestellt werden.

Unter Folien aus Polyamid sind solche bevorzugt, die sich von Nylon 6 ableiten.

Unter Folien aus Polyester sind solche aus Polybutylenterephthalat und insbesondere aus Polyethylenterephthalat (PET) bevorzugt.

Unter Folien aus Polycarbonaten sind solche bevorzugt, die sich von Polycarbonaten ableiten, die unter Verwendung von Bisphenol A hergestellt sind.

Unter Folien aus Polyvinylchlorid sind solche aus Hart-Polyvinylchlorid oder Weich-Polyvinylchlorid zu verstehen, wobei Weich-Polyvinylchlorid auch Copolymere des Vinylchlorids mit Vinylacetat und/oder Acrylaten umfasst.

Kunststofffolien im Sinne der vorliegenden Erfindung können auch Verbundfolien umfassen; beispielsweise Folien, die eine der vorstehend genannten Folien und eine Metallfolie oder Faserfolien umfassen.

Als "Klebstoff" wird bevorzugt ein lösungsmittelfreier Schmelzklebstoff eingesetzt. Hierbei handelt es sich insbesondere um bei Raumtemperatur (21 °C +/-1 °C) feste, wasser- und lösungsmittelfreie Klebstoffe, welche auf die zu verklebenden Materialien aus der Schmelze aufgetragen werden und nach dem zusammenfügen beim Abkühlen unter Verfestigung physikalisch und/oder chemisch abbinden.

Es eigenen sich aber auch Haftklebstoffe, Dispersionsklebstoffe, Lösungsmittelklebstoffe, zum Beispiel auf Basis von Polyurethan, Polyacrylat, Ethylenvinylacetat (EVA), Polyvinylacetat (PVAC), Styrol-lsopren-Styrol- Copolymer (SIS), Styrol-Butadien-Styrol-Copolymer (SBS) oder Chloropren-Kautschuk (CR).□Geeignete Schmelzklebstoffe können, je nach Anforderungen, insbesondere Schmelzklebstoffe in thermoplastischer oder reaktiver Qualität sein.

Die eingesetzten Schmelzklebstoffe werden insbesondere in Abhängigkeit von den zu verklebenden Materialien und den diesbezüglichen jeweiligen Anforderungen, beispielsweise einer geforderten Temperatur- bzw. Hitzebeständigkeit der Verklebung etc., ausgewählt.

Als thermoplastische Schmelzklebstoffe können insbesondere solche auf Basis von Ethylenvinylacetaten (EVA), Polyolefinen (z. B. amorphen Poly-alpha- olefinen oder Metallocen-katalytisch hergestellten Polyolefinen), Polyacrylaten, Copolyamiden, Copolyestern und/oder thermoplastischen Polyurethanen bzw. entsprechenden Co- und/oder Terpolymeren eingesetzt werden. Besonders bevorzugt sind dabei Metallocen-katalytisch hergestellte Polyolefine, da diese eine erhöhte Tackfreiheit besitzen.

Als reaktive, beispielsweise feuchtigkeitsvernetzende Schmelzklebstoffe kommen insbesondere solche auf Basis von silangepfropften amorphen Poly- alpha-olefinen, silangepfropften Metallocen-katalytisch hergestellten Polyolefinen (vgl. EP 1 508 579 Al) oder isocyanat-terminierten Polyurethanen zum Einsatz. Bei den reaktiven Schmelzklebstoffen führt die nachfolgende Vernetzung mit Feuchtigkeit zu temperatur- bzw. hitzebeständigen Verklebungen. Reaktive Schmelzklebstoffe kombinieren somit die Vorteile der schnellen Anfangsfestigkeit durch den physikalischen Abbindevorgang des Abkühlens mit einer nachfolgend stattfindenden chemischen Vernetzung. Bei der Verarbeitung feuchtigkeitsreaktiver Schmelzklebstoffe muss die Schmelze vor ihrer Applikation vor Feuchtigkeit geschützt werden.

Polymere für im Rahmen der vorliegenden Erfindung geeignete, reaktive feuchtigkeitsvernetzende Schmelzklebstoffe sind beispielsweise die im Handel unter der Produktbezeichnung "Vestoplast® 206" von der Degussa AG, Marl, Deutschland, erhältlichen silanmodifizierten Poly-alpha-olefine. Erfindungs- gemäß besonders bevorzugt sind silanmodifizierte Poly-alpha-olefine mit zahlenmittleren Molekulargewichten Mn von 5.000 bis 25 .000 g/mol, vorzugsweise 10.000 bis 20.000 g/mol.

Wie nachfolgend noch im Detail beschrieben, können zur Steuerung der offenen Zeit und/oder der Adhäsionseigenschaften reaktiven Schmelzklebstoffe Additive auf Basis nichtreaktiver Polymere, Harze und/oder Wachse zugesetzt sein, so z. B. gegebenenfalls hydrierte Kolophoniumharzester und aliphatische Kohlenwasserstoffharze.

Der Auftrag des Klebstoffs auf die Oberfläche der Folie und/oder das Bauteil, vorzugsweise ausschließlich auf der Oberfläche der Folie, erfolgt, wie zuvor beschrieben, in Temperaturbereichen von 90 °C oder mehr und 220 °C oder weniger, vorzugsweise 120 °C oder mehr und 190 °C oder weniger.

Um eine gute Auftragbarkeit des Schmelzklebstoffs zu erreichen, werden üblicherweise solche Schmelzklebstoffe verwendet, welche bei den Verarbeitungstemperaturen, im Allgemeinen, 90 °C bis 200 °C, Brookfield- Viskositäten im Bereich von, im Allgemeinen, 50 bis 1.000.000 mPa·s aufweisen.

Beispielsweise können in erfindungsgemäß bevorzugter Weise reaktive Schmelzklebstoffe auf Basis von silangepfropften Polyolefinen, insbesondere silangepfropften Poly-alpha-olefinen, eingesetzt werden, welche bei 180 °C Brookfield-Viskositäten im Bereich von 50 bis 50.000 mPa·s, insbesondere 1.000 bis 10.000 mPa·s, vorzugsweise 5.000 bis 8.000 mPa·s, besonders bevorzugt 5.500 bis 7.500 mPa·s, aufweisen.

Zur Steuerung der Reaktivität und des Vernetzungsverhaltens können den reaktiven Schmelzklebstoffen üblicherweise die für diese Zwecke an sich gängigen Katalysatoren zugesetzt sein, so z. B. Dibutylzinndilaurat (DBTL), und dies in den für diese Zwecke an sich üblichen Mengen. Beispiele für erfindungsgemäß geeignete Katalysatoren sind die in der Klebstoffchemie gängigen und bekannten Katalysatoren, wie beispielsweise organische Zinnverbindungen, wie das zuvor genannte Dibutylzinndilaurat (DBTL) oder aber Alkylmercaptidverbindungen des Dibutylzinns, oder aber organische Eisen-, Blei-, Cobalt-, Wismut-, Antimon- und Zinkverbindungen sowie Mischungen der zuvor genannten Verbindungen oder Katalysatoren auf Aminbasis, wie tertiäre Amine, 1,4-Diazabicyclo[2.2.2]octan und Dimorpholinodiethylether sowie deren Mischungen. Erfindungsgemäß besonders bevorzugt ist Dibutylzinndilaurat (DBTL), insbesondere in Kombination mit Klebstoffen auf Basis der vorgenannten reaktiven, vorzugsweise silanmodifizierten Poly-alpha-olefine. Die eingesetzten Mengen an Katalysator(en) können in weiten Bereichen variieren; insbesondere beträgt die eingesetzte Katalysatormenge 0,01 bis 5 Gew.-%, bezogen auf den Klebstoff. Zur Steuerung der Anwendungseigenschaften der Klebstoffe können diesen außerdem weitere Additive zugesetzt sein, wie beispielsweise Weichmacher, hochsiedende organische Öle oder Ester oder andere der Plastifizierung dienende Additive, Stabilisatoren, Antioxidantien, Säurefänger, Füllstoffe, Alterungsschutzmittel und dergleichen.

Zur Steuerung der offenen Zeit und/oder der Adhäsionseigenschaften der zuvor genannten Klebstoffe, insbesondere auch im Hinblick auf eine verbesserte Handhabbarkeit, können den vorgenannten Schmelzklebstoffen außerdem weitere Additive auf Basis nichtreaktiver Polymere, Harze und/oder Wachse zugesetzt sein. Auf diese Weise lassen sich die Klebstoffeigenschaften anwendungsbezogen einstellen und sozusagen maßschneidern.

Was die nichtreaktiven Polymere anbelangt, so können diese beispielsweise ausgewählt sein aus der Gruppe von (i) Ethylenvinylacetat-Copolymeren oder -Terpolymeren, insbesondere solchen mit Vinylacetat-Gehalten zwischen 12 und 40 Gew.-%, insbesondere 18 bis 28 Gew.-%, und/oder mit Schmelzindizes (MFls, DIN 53735) von 8 bis 800, insbesondere 150 bis 500; (ii) Polyolefinen, wie unmodifizierten amorphen Poly-alpha-olefinen, insbesondere mit zahlenmittleren Molekulargewichten Mn von 5.000 bis 25.000 g/mol, vorzugsweise 10.000 bis 20.000 g/mol, und/oder mit Erweichungsbereichen nach Ring und Kugel zwischen 80 °C und 170 °C, vorzugsweise zwischen 80 °C und 130 °C, oder unmodifizierten Metallocen- katalytisch hergestellten Polyolefinen (vgl. DE 103 23 617 Al); und (iii) (Meth-)acrylaten wie Styrol(meth)acrylaten sowie Mischungen dieser Verbindungen.

Was die nichtreaktiven Harze anbelangt, so können diese insbesondere ausgewählt sein aus der Gruppe von Kohlenwasserstoffharzen, insbesondere aliphatischen, cyclischen oder cycloaliphatischen Kohlenwasserstoffharzen, gegebenenfalls modifizierten Kolophoniumharzen (z. B. Kolophoniumharzestern), Terpen-Phenolharzen, Cumaron-lndenharzen, Methylstyrol-Harzen, polymerisierten Tallharzestern und/oder Ketonaldehydharzen.

Was die nichtreaktiven Wachse anbelangt, so können beispielsweise Polyolefinwachse, wie Polyethylen- und Polypropylenwachse, oder auf dieser Basis modifizierte Wachse eingesetzt werden.

Bevorzugt besteht das zu kaschierende "Trägerteil" für das herzustellende "kaschierte Formteil" aus einem Material, das ausgewählt ist aus Materialien auf der Basis von naturfaserverstärkten Polymerwerkstoffen, beispielsweise ein Naturfaser-, beispielsweise ein Flachs-Polypropylen- Material, Naturfaser-, beispielsweise ein (Flachs)-PUR oder ein Naturfaser-, beispielsweise (Flachs)-Epoxidharz-Material, sowie auch ein im Spritzguss-Verfahren hergestellter Träger aus Polypropylen (PP), Styrol-Isopren-Styrol- Copolymer (ABS), Polycarbonat-ABS (PCABS), Polycarbonat (PC), thermoplastischem Polyurethan (TPU), thermoplastischem Polyolefin (TPO) oder Polyamid.

Besonders bevorzugt sind Materialien aus Kunststoff-Spritzguss, aus Acrylnitril-Butadienstyrol (ABS), Polycarbonat-ABS (PCABS), Polypropylen (PP), Polycarbonat (PC), thermoplastischem Polyolefin (TPO), Faserverbundwerkstoffe umfassend Naturfaser-PP, Glasfasern, Karbonfasern, Kunststofffasern, mineralischen Füllstoffen, Bindemittel- PP, Polyurethan, Phenolharz oder Kombinationen derselben.

Die Bauteile können eine Narbung aufweisen. Bevorzugt sind jedoch Bauteile ohne oder für den Abtransport von Luft ungeeignete Narbung (dies ist beispielsweise der Fall bei einer zu flachen Narbung).

Weiterhin sind die Bauteile vorzugsweise formstabil und/oder luftundurchlässig bzw. nur begrenzt luftdurchlässig bzw. vakuumdurchlässig.

Im Rahmen der vorliegenden Erfindung wurden verschiedene Kaschierversuche auf glatten, ungenarbten Bauteilen mit einer im Automobilbereich üblicherweise eingesetzten TPO-Schaumfolie durchgeführt, wobei unterschiedliche Bauteilgeometrien, Klebstoffgravuren (auf der TPO-Folie), Kaschierparameter und sowie eine unterschiedliche Anzahl und Art von Bohrungen sowie Bohrungspositionen im Bauteil getestet wurden. Das Bauteilmaterial und der Klebstoff waren so ausgewählt, dass der Klebstoff nur begrenzte Adhäsion zu den Bauteilen aufbaut um ein Abziehen der kaschierten Folie und eine genaue Begutachtung der Klebfuge zu ermöglichen. Die Analyse der erfindungsgemäß kaschierten Bauteile zeigte eine perfekte Verklebung ohne Lufteinschlüsse.

Tatsächlich sind die durch den Gravurauftrag angelegten Kanäle auch im kaschierten Formteil noch erkennbar. Dadurch wird, zum Beispiel, die bei mit Luftfeuchtigkeit vernetzenden reaktiven Klebstoffen gefürchtete, unvollständige oder verlangsamte Vernetzung des Klebstoffs in Bereichen ohne Luftkontakt vermieden.

Im Allgemeinen wird das erfindungsgemäße Verfahren in der Form durchgeführt, dass das zusammenfügen von Kaschierfolie und Bauteil nach Beaufschlagung von Kaschierfolie und/oder des Bauteils mit dem Klebstoff durch Anlegen eines Unterdrucks (bzw. eines Vakuums) und/oder mittels Druck erfolgt. Die Verbindung mittels Druck geschieht beispielsweise durch Pressen der Folie auf das Bauteil oder Einpressen des Bauteils in die Folie, wobei die Folie in einer harten oder elastischen Aufnahme liegt, deren Form an das Bauteil angepasst ist.

Der Klebstoffauftrag erfolgt bevorzugt auf einer Oberfläche der Kaschierfolie, die im nachfolgenden Schritt dem zu kaschierenden Substrat zugewandt sein wird. Die mit Klebstoff rasterförmig beschichtete Kaschierfolie kann sofort auf das Bauteil aufgelegt und anschließend aufkaschiert werden oder, alternativ, gelagert und später zur Kaschierung verwendet werden. Im letzteren Fall ist die mit Klebstoff vorbeschichtete Folie dann vorzugsweise lagerstabil. Dies bedeutet auch, dass sie als Rollenware bei Lagerung und Transport nicht verblockt und die Eigenschaften der Gravur bei Lagerung und Transport erhalten bleiben.

Die Verbindung mittels Vakuum erfolgt üblicherweise durch Anlegen eines Vakuums über den Rand des Bauteils oder über im Bauteil angeordnete Öffnungen, über welche ein Unterdruck angelegt werden kann (sogenannte Vakuumlöcher). Die Anzahl der Vakuumlöcher ist dabei der Größe und Geometrie des jeweiligen Bauteils sowie der verwendeten Klebstoffgravur/Klebstoffauftragung anzupassen. Vorzugsweise ist im Bauteil wenigstens ein Vakuumloch angeordnet. In weiteren erfindungsgemäßen Ausgestaltungen sind zwei, drei, vier oder noch mehr Öffnungen im Basisteil (also Substrat oder Trägerteil) angeordnet.

Bevorzugt erfolgt das Verbinden von Kaschierfolie und Bauteil unter Erwärmen, insbesondere oberhalb des Schmelz- oder Erweichungsbereiches des Klebstoffs.

Gemäß einer besonders bevorzugten Ausführungsform wird dabei die Kaschierfolie zunächst mit einem geeigneten Schmelzklebstoff rasterförmig beaufschlagt und anschließend mit dem zu kaschierenden Bauteil zusammengefügt. Dabei wird der Schmelzklebstoff üblicherweise vor und/oder während des Zusammenfügens von Kaschierfolie und Bauteil oberhalb seiner Schmelz- bzw. Erweichungstemperatur erhitzt, so dass eine sichere Klebeverbindung zwischen Kaschierfolie einerseits und Bauteil andererseits gewährleistet ist.

Zur Gewährleistung eines sicheren Verbunds zwischen der Kaschierfolie einerseits und dem Bauteil andererseits bei gleichzeitig guten Verarbeitungseigenschaften, wie optischen Eigenschaften etc., wird der Klebstoff bevorzugt in einer Menge von 10 g/m² oder mehr und 200 g/m² oder weniger, vorzugsweise 50 g/m² oder mehr und 100 g/m² oder weniger, eingesetzt bzw. aufgetragen.

Der Klebstoff bedeckt nach dem Auftrag vorzugsweise 40 % oder mehr und 99 % oder weniger der mit dem Klebstoffraster versehenen Gesamtfläche der Folie und/oder des Bauteils, vorzugsweise der Folie, besonders bevorzugt 60 % oder mehr und 90 % oder weniger, ganz besonders bevorzugt 70 % oder mehr und 85 % oder weniger.

Der Auftrag des Klebstoffs kann unter Erwärmen, üblicherweise unter Aufschmelzen, bei Temperaturen im Bereich von 40 °C oder mehr und 220 °C oder weniger, insbesondere 120 °C oder mehr und 190 °C oder weniger erfolgen.

In einer bevorzugten Ausgestaltung des erfindungsgemäßen Verfahrens erfolgt dieses unter Erhitzen der mit dem Klebstoff beschichteten Kaschierfolie vor und/oder während des Verbindens mit dem Bauteil. Alternativ kann auch das Bauteil erhitzt werden.

Die "B-Seite" ist diejenige Seite der Kaschierfolie, die dem Trägerteil zugewandt werden soll.

Entscheidend für den Erfindungsgedanken des ersten Aspekts der hier vorliegenden Erfindung ist jedoch die Reihenfolge dreier Schritte zueinander: Zunächst muss der Klebstoff auf die B-Seite der Folie aufgebracht werden. Danach muss der bereits aufgebrachte Klebstoff in einem separaten Schritt, also in Durchlaufrichtung durch die Maschine danach, unmittelbar oder mittelbar anschließend, umgeformt werden und dabei eine makroskopische Struktur eingebracht werden, also ein "Raster"; erst mit dem bereits umgeformten Klebstoff soll dann die Verbindung zwischen der Kaschierfolie und dem Trägerteil hergestellt werden.

Während in der noch nicht veröffentlichten europäischen Patentanmeldung 14164625.7 der Auftrag des Klebstoffs direkt mit einer makroskopischen Struktur erfolgt, besteht der hier vorgestellte Unterschied darin, dass die Struktur nicht in einem Schritt erreicht wird, sondern erst in (mindestens) zwei Schritten, nämlich dem Auftragen und dann dem strukturgebenden Umformen.

Von Vorteil wird es durch das hier vorgestellte Verfahren möglich, bei geeigneter Gestaltung bestehende Anlagenkomponenten weiter zu verwenden, nämlich beispielsweise eine bereits vorhandene Einrichtung zum Auftragen von Klebstoff in herkömmlicher Weise.

Erst durch das zusätzlich vorgenommene Umformen entstehen die komplizierten Geometrien im Kunststoff und/oder im Klebstoff, welche als Kanäle während des Kaschiervorgangs dienen können.

Eine bestehende Anlage wird dadurch kostengünstig und mit hoher Arbeitsqualität nachrüstbar.

Es sei ausdrücklich darauf hingewiesen, dass im Rahmen der hier vorliegenden Patentanmeldung unbestimmte Artikel und Zahlenangaben wie "ein", "zwei" usw. im Regelfall als mindestens-Angaben zu verstehen sein sollen, also als "mindestens ein...", "mindestens zwei..." usw., sofern sich nicht aus dem jeweiligen Kontext ausdrücklich, mittelbar oder technisch zwingend für den Fachmann ergibt, dass etwa dort nur "genau ein...", "genau zwei..." usw. gemeint sein soll oder kann.

Nach einem zweiten Aspekt der vorliegenden Erfindung löst die gestellte Aufgabe ein Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten (a) Einbringen von Vertiefungen in die B-Seite der Kaschierfolie, und (b) Einbringen des Klebstoffs in die Vertiefungen hinein und/oder zwischen den Vertiefungen, wobei die Reihenfolge dieser zwei Schritte auch umgedreht sein kann.

Begrifflich sei dazu erläutert, dass eine "Vertiefung" eine singuläre, vor allem eine Vielzahl von singulären, Mulde oder ein Kanal ist, wobei sich die Vertiefung gegenüber der Oberfläche auf der B-Seite der Kaschierfolie misst. Insbesondere kann als Referenzwert die Oberfläche an der B-Seite der Kaschierfolie verwendet werden, und zwar im Zulauf zu der Station beziehungsweise dem Werkzeug zum Einbringen der Vertiefungen. So ist es beispielsweise denkbar, dass die Folie auf der B-Seite glatt ist und dem Werkzeug zum Einbringen von Vertiefungen zuläuft. Beim Einbringen von Vertiefungen werden dann eine Vielzahl von Mulden oder Kanäle in die B-Seite eingedrückt, entweder über direkte, kontaktbehaftete mechanische Belastung oder über Über- oder Unterdruckaufbringung.

Es kann einerseits vorteilhaft sein, den Klebstoff in die Vertiefung hinein einzubringen. Dafür spricht, dass die Kaschierfolie mit dem in den Vertiefungen befindlichen Klebstoff leichter weiter transportiert werden kann, ohne dass die Gefahr besteht, dass ein Übermaß an Klebstoff verläuft seitlich weggequetscht wird oder ähnliche nicht vorhersehbare Umlagerungen des Klebstoffs erfolgen. Andererseits spricht für ein Einbringen des Klebstoffs zwischen die Vertiefungen, dass dort das Auftragen in den meisten Fällen leichter sein wird und sogar mit herkömmlichen Werkzeugen durchgeführt werden kann. So kann beispielsweise eine herkömmliche Breitschlitzdüse verwendet werden, die im Stand der Technik einen vollflächigen, glatten Klebstoffauftrag auf eine Kaschierfolie aufbringt. Denn eine solche Breitschlitzdüse ist bereits aufgrund der bisherigen Erfahrungen des Bedienpersonals leicht so einstellbar, dass die in Maschinenrichtung durchlaufende Kaschierfolie in der Ebene ihrer zulaufenden Oberfläche mit Klebstoff versehen wird. In einem solchen Falle bliebe eine Vertiefung entweder frei von Klebstoff oder zumindest würde weniger Klebstoff aufgetragen.

Ein Umdrehen der Schritte ist auch denkbar, so dass der Klebstoff zunächst aufgetragen wird und erst danach die Vertiefungen in der Kaschierfolie hergestellt werden. Der Auftrag des Klebstoffs kann dabei schon in makrostrukturierten Kanälen erfolgen, oder es kann eine Umverteilung des Klebstoffs beim Erzeugen der Vertiefungen erfolgen.

Nach einem dritten Aspekt der vorliegenden Erfindung löst die gestellte Aufgabe ein Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten (a) Aufbringen des Klebstoffs durch eine Breitschlitzdüse, (b) wobei der Austritt des Klebstoffs durch die Breitschlitzdüse durch lokale Widerstände am Austritt gehindert und dadurch ein Raster geformt wird.

Dieser Aspekt der Erfindung ist wie folgt zu verstehen: An der Breitschlitzdüse zum Austreten des Klebstoffs liegt zulaufseitig ein zumindest im Wesentlichen uniformer Druck an. Die Breitschlitzdüse hat einen über die gesamte Länge des Schlitzes im Normalfall gleich breit bleibenden Austrittsschlitz. Es tritt also an jedem Punkt der Breitschlitzdüse Klebstoff mit der gleichen Geschwindigkeit und somit mit dem gleichen Durchsatz aus und wird dadurch auf der Kaschierfolie angeheftet.

Dies setzt jedoch voraus, dass der Austrittsströmung des Klebers über die gesamte Breite der Breitschlitzdüse ein einheitlicher Widerstand entgegengesetzt wird.

Wird jedoch der Widerstand über die Breite der Breitschlitzdüse lokal geändert, so changiert auch der Volumenstrom des austretenden Klebstoffs.

Wenn beispielsweise die Kaschierfolie lokal näher an der Breitschlitzdüse entlang transportiert oder weiter von ihr entfernt transportiert wird, und/oder wenn die Oberfläche der B-Seite der Kaschierfolie eine unterschiedliche Oberflächenspannung über die Breite der Breitschlitzdüse aufweist und/oder wenn beispielsweise lokal ein Gitter, ein Stab, eine Klappe oder ein anderer Austrittsquerschnittsveränderer vor den Breitschlitz bewegt und von diesem wieder weg entfernt wird, dann führt all dies zu einer rasterförmigen Auftragung von Klebstoff auf die Kaschierfolie.

Nach einem vierten Aspekt der vorliegenden Erfindung löst die gestellte Aufgabe ein Verfahren zum Auftragen eines Hotmelts auf eine Kaschierfolie und ein anschließendes Aufkaschieren auf ein Trägerteil, wobei der Hotmelt strukturiert aufgebracht wird. Unter rasterförmigem Klebstoffauftrag (Gravurauftrag) gemäß der vorliegenden Erfindung wird in der vorliegenden Offenbarung ein strukturierter Klebstoffauftrag, vor allem auf einer Oberfläche, verstanden, der zwischen den einzelnen Klebstoffauftragungen Kanäle bzw. ein Kanalsystem aufweist, welches vorzugsweise zusammenhängend ist. Der Klebstoff wird vorzugsweise in Form von Punkten und/oder Streifen in vorgegebenen Abständen (d.h. in einem bestimmten Raster) aufgetragen. Die dabei ausgebildeten Kanäle (bzw. das Kanalsystem) zwischen den Klebstoffkauftragungen ermöglichen nach dem zusammenfügen der Kaschierfolie und dem Bauteil ein optimiertes Absaugen bzw. Herauspressen, also Entfernen, der zwischen Folie und Bauteil befindlichen Luft. Das Absaugen der Luft erfolgt typischerweise über den Rand des Bauteils oder dadurch, dass über im Bauteil angeordnete Vakuumlöcher ein Unterdruck/Vakuum angelegt wird. Insbesondere ermöglichen die durchgehenden Kanäle (Kanalsystem) ein gleichmäßiges Entweichen der Luft durch Absaugen und/oder Herauspressen über die gesamte Oberfläche des mit Folie bedeckten Bauteils, wobei dies weitgehend unabhängig von der Geometrie des Bauteils (beispielsweise eventuell vorhandene Radien) geschieht. Auch bei der Folienkaschierung unter Anwendung von Druck ist die rasterförmige, das Kanalsystem bildende, Klebstoffauftragung gleichermaßen von Vorteil, da hier die zwischen dem Bauteil und der Folie befindliche Luft über die gesamte Oberfläche des Bauteils gleichmäßig herausgepresst werden kann.

Überraschendweise wurde ferner gefunden, dass die rasterförmige, Kanäle ausbildende Struktur des Klebstoffauftrags während des Kaschierverfahrens ausreichend erhalten bleibt und kein Zerfließen des Klebstoffes stattfindet. Die Art des verwendeten Klebstoffs unterliegt dabei keiner besonderen Einschränkung, so dass hier grundsätzlich alle für die Folienkaschierung üblichen Kaschierklebstoffe eingesetzt werden können. Es wird insoweit auf den diesbezüglichen bekannten Stand der Technik verwiesen.

Weiterhin ermöglicht der rasterförmige Klebstoffauftrag, dass bei der Verwendung feuchtigkeitsreaktiver Klebstoffe über die Kanäle ausreichend Kontakt zur umgebenden Luft und damit zur Luftfeuchtigkeit besteht. Ein unvollständiges Vernetzen des Klebstoffes und somit die Bildung von Fehlstellen ohne Verklebung wird dadurch vermieden.

Der rasterförmige Auftrag von Klebstoffen, insbesondere von Schmelzklebstoffen, ist dem Fachmann an sich bekannt. Typischerweise wird der rasterförmige Auftrag jedoch nur aus Gründen der Verringerung der Klebstoffmenge, dem besseren Verankern des Klebstoffes in offenen Substraten, wie z.B. Schäumen, dem Erstellen atmungsaktiver Laminate, z.B. bei der Kaschierung von atmungsaktiven Membranen bei denen ein geschlossener Klebstofffilm unerwünscht ist, eingesetzt. Die gezielte Verwendung in Kaschierverfahren unter Verwendung von Unterdruck oder Pressdruck und insbesondere zur Reduzierung und Vermeidung von Lufteinschlüssen, ist jedoch nicht bekannt.

Bei der gezielten Verwendung einer bestimmten Gravur, bei der der Klebstoff rasterförmig aufgetragen wird, bilden sich Bereiche, insbesondere linienförmige Bereiche ohne (oder mit deutlich geringerem) Klebstoffauftrag aus (sogenannte Kanäle), welche im Kaschierprozess hinreichend lange bestehen bleiben, so dass ein vollständiges und großflächiges, d.h. gleichmäßiges Entfernen der zwischen der Folie und dem Substrat befindlichen Luft durch Absaugen und/oder Herauspressen der Luft möglich wird.

Vorzugsweise bleiben die Kanäle bis zum Ende des Kaschierprozesses und somit auch insbesondere im fertig kaschierten Formteil erhalten.

Die Geometrie der Gravur bzw. des Rasters unterliegt dabei prinzipiell keinen Beschränkungen, soweit sichergestellt ist, dass ausreichend Kanäle gebildet werden, die ein Entfernen der Luft durch Absaugen und/oder Herauspressen bzw. bei feuchtigkeitsreaktiven Klebstoffen ausreichend Luftzugang (und damit Feuchtigkeitszutritt zum Klebstoff) ermöglichen.

Vorzugsweise wird der Klebstoff punktförmig oder streifenförmig aufgetragen, besonders bevorzugt in Form von pyramidenstumpfförmigen, mehreckigen (zum Beispiel drei, vier-, fünf-, sechs-, sieben-, acht-, neun- oder zehneckigen), rautenförmigen, rechteckigen, ovalen, L-förmigen, runden oder unregelmäßig geformten Klebstoffauftragungen, insbesondere in Form von pyramidenstumpfförmigen Klebstoffauftragungen.

Weiterhin können auch Gravuren eingesetzt werden, welche dem Fachmann von den Standard-Narbgravuren der Bauteile her hinreichend bekannt sind.

Die Klebstoffauftragungen (insbesondere die pyramidenstumpfförmigen Klebstoffauftragungen) werden vorzugsweise in einem Abstand (gemessen an der Substratoberfläche) von 0,1 mm oder mehr und 10,0 mm oder weniger, vorzugsweise 0,3 mm oder mehr und 5,0 mm oder weniger, besonders bevorzugt 0,5 mm oder mehr und 4,0 mm, oder weniger, ganz besonders bevorzugt 1,0 mm oder mehr und 3,5 mm oder weniger, insbesondere 1,5 mm oder mehr und 2,5 mm oder weniger aufgetragen.

Die Gravurtiefe, d.h. die Dicke (Höhe gemessen ab der jeweiligen Substratoberfläche) der Klebstoffauftragungen, liegt bevorzugt im Bereich von 0,1 mm oder mehr und 1,5 mm oder weniger, besonders bevorzugt 0,2 mm oder mehr und 1,0 mm oder weniger, ganz besonders bevorzugt 0,5 mm oder mehr und 0,8 mm oder weniger.

Die Klebstoffpunkte werden dabei bevorzugt in unregelmäßiger Anordnung oder in unterschiedlichen Bereichen unterschiedlicher, vorzugsweise unregelmäßiger Anordnung aufgetragen, d.h. ohne Ausbildung von längeren geradlinigen Kanälen. Die Ausbildung einer Sekundärstruktur (d.h. einer Struktur, die erst durch eine bestimmte regelmäßige Anordnung der Klebstoffauftragungen erkennbar wird) wird somit vermieden, was dazu führt, dass der Betrachter des fertigen, kaschierten Bauteils den Anschein einer besonders glatten Oberfläche erhält. Selbstverständlich sind auch regelmäßige Klebstoffauftragungen in Form von geometrischen Mustern, deren Kombinationen oder Kombinationen davon mit unregelmäßigen Klebstoffauftragungen möglich. Auch kann die Klebstoffauftragung an das Formteil, dessen Gestalt und/oder dessen Oberfläche angepasst sein.

Durch die durch das Klebstoffraster gestalteten/ausgebildeten Kanäle können insbesondere auch Bauteile ohne jegliche Narbung (oder solche mit flacher, typischerweise ungeeigneter Narbung, oder glatter Oberfläche) sowie Bauteile mit wenigen Löchern kaschiert werden. Hierdurch entsteht eine erheblich geringere Anzahl von Fehlstellen. Im bevorzugten Idealfall weist das Endprodukt keine erkennbaren Fehlstellen auf.

Wird der Klebstoff aufgeschmolzen (z.B. bei Verwendung von Schmelzklebstoffen), verläuft dieser nicht flächig, sondern es bilden sich beim Vorliegen einer geeigneten Gravur einzelne Tropfen, wobei die Kanäle zwischen den Tropfen erhalten bleiben. Diese Kanäle ermöglichen dann einen gleichmäßigen Lufttransport im Bereich zwischen dem Bauteil und der Kaschierfolie und damit die gewünschte horizontale Vakuumgängigkeit (horizontaler Lufttransport, d.h. Entfernung der Luft) innerhalb des Klebststoffrasters.

Bevorzugt wird der Hotmelt zu Kanalbildungserhebungen strukturiert aufgebracht, so dass sich zwischen den Kanalbildungserhebungen Kanäle bilden, durch welche Luft die Folienoberfläche entlang gesaugt werden kann, wobei bevorzugt ein Rautenmuster erzeugt wird.

Prinzipiell lässt sich aber die Erfindung sowohl mit einem Positivauftrag als auch mit einem Negativauftrag ausführen, also sowohl mit einem Auftrag des Klebstoffs als makrostrukturelle Erhebung, wobei sich zwischen der Vielzahl von makrostrukturellen Erhebungen die Kanäle ausbilden; oder als Kanäle, wobei anschließend durch eine Umformung erfolgt, welche die Kanäle erzeugt.

Nach einem fünften Aspekt der vorliegenden Erfindung löst die gestellte Aufgabe ein Verfahren, vor allem unter Einbindung eines Verfahrens wie vorstehend beschrieben, zum Herstellen eines kaschierten Formteils mittels eines Trägerteils, einer Kaschierfolie und eines Klebstoffs, insbesondere eines Hotmelts, wobei der Klebstoff eine B-Seite der Kaschierfolie und eine Oberfläche des Trägerteils verbindet, mit den Schritten (a) rasterförmiges Auftragen des Klebstoffs auf die B-Seite der Kaschierfolie und/oder auf die Oberfläche des Trägerteils, wobei durch das rasterförmige Auftragen des Klebstoffs Kanäle ausgebildet werden, und zwar entweder bereits beim ersten Auftragen oder nach einem Umformen; (b) Zusammenfügen des Trägerteils und der Kaschierfolie so, dass die Schicht des rasterförmig aufgetragenen Klebstoffs zwischen der Kaschierfolie und dem Trägerteils angeordnet ist; und (c) Verbinden der Kaschierfolie mit dem Trägerteil durch (i) Abziehen der zwischen Trägerteil und Kaschierfolie befindlichen Luft über die Kanäle durch Anlegen eines Unterdrucks und/oder durch (ii) Herauspressen der zwischen Trägerteil und Kaschierfolie befindlichen Luft über die Kanäle durch Anlegen eines Pressdrucks, wobei sich das Verfahren dadurch kennzeichnet, dass die Kaschierfolie von einer Rolle als Endlosfolie abgezogen wird und/oder dass der Klebstoff während des Umlaufs der Kaschierfolie um eine Walze aufgetragen wird und/oder dass der Klebstoff mittels einer Breitschlitzdüse auf die Kaschierfolie aufgetragen wird und/oder dass der Klebstoff in eine Vertiefung hinein aufgetragen wird.

Vorstehend wurden fünf voneinander unabhängige Aspekte der Erfindung im Detail erläutert.

Es sei ausdrücklich darauf hingewiesen, dass sich die fünf vorstehend beschriebenen unabhängigen Erfindungsaspekte in beliebiger Form zu zweit, zu dritt, zu viert oder zu fünft miteinander kombinieren lassen.

Dasselbe gilt ausdrücklich auch für alle Merkmale, die in Zusammenhang mit einer der unabhängigen Aspekte vorstehend beschrieben worden sind oder nachstehend beschrieben werden. All diese lassen sich auch auf jeden anderen der Aspekte der hier vorliegenden Erfindung anwenden.

Zur konstruktiven Ausführung wird vorgeschlagen, dass die Kaschierfolie um eine Prägewalze geführt wird, wobei die Oberfläche der Prägewalze strukturierte Erhebungen aufweist und damit ein Kanalmuster zu prägen eingerichtet ist.

Die Zuführung der Kaschierfolie über Walzen ist sinnvoll, weil in den meisten bereits bestehenden Anlagen schon Walzenanordnungen zum Durchlauf für die Kaschierfolienbahn vorgesehen sind. In einer Walzenstrecke wird die Kaschierfolienbahn unter Zugkräften um die Walzen herumgeführt. Wenn eine Walze strukturierte Erhebungen in ihrer Oberfläche hat, was hier als eine "Prägewalze" bezeichnet wird, dann kann die Zugkraft darauf ausgelegt werden, vor allem in Kombination mit einer Beheizung der Prägewalze und/oder der Kaschierfolienbahn, dass bereits dadurch die strukturierte Auftragung möglich wird. So kann beispielsweise die Prägewalze in einen bereits vorher aufgebrachten vollflächigen Klebstofffilm kanalförmige Aussparungen einpressen; oder die Prägewalze kann in die Kaschierfolie Vertiefungen einpressen, vor allem bevor eine Beaufschlagung mit Klebstoff erfolgt.

So ist es konkret denkbar, dass die Kaschierfolie um eine Prägewalze geführt wird, wobei die Oberfläche der Prägewalze strukturierte Erhebungen aufweist und damit eine Vielzahl von Vertiefungen in die Kaschierfolie einprägt, entweder als eine Vielzahl diskreter nicht verbundener Vertiefungen oder als eine Vielzahl von zu einem Kanalsystem verbundenen Vertiefungen.

Die Kaschierfolie kann während der Ausführung eines erfindungsgemäßen Verfahrens um eine Andrückwalze geführt werden, insbesondere nach einem Führen um eine Prägewalze, und während ihres Umlaufs um die Andrückwalze an einer Breitschlitzdüse entlang geführt werden.

Während des Führens der Kaschierfolienbahn um eine Walze ist ihre Lage mit sehr hoher Präzision vorherbestimmbar. Dies ermöglicht es, eine Breitschlitzdüse auf eine exakt vorherbestimmbare Entfernung zur Kaschierfolienbahn einzustellen. Dadurch kann präzise wahlweise sowohl ein Einbringen des Klebstoffs in Vertiefungen bei gleichzeitigem Aussparen der nicht vertieften Bereiche als auch alternativ ein zumindest im Wesentlichen vollflächiges Versehen der nicht-vertieften Flächen mit Klebstoff bei gleichzeitigem Aussparen der Vertiefungen erreicht werden.

Außerdem ist es möglich, eine herkömmliche Breitschlitzdüse zu verwenden, wobei nur gegebenenfalls der Abstand zur vorbeilaufenden Kaschierfolienbahn verstellt wird. In die vorhandene Walzenstrecke wird entweder eine weitere Walze eingesetzt, nämlich die Prägewalze, oder eine Walze wird ausgetauscht.

Es ist auch denkbar, dass der Klebstoff in in die Kaschierfolie eingebrachte makroskopische Vertiefungen eingebracht wird, bevorzugt oberflächenbündig mit der B-Seite der Kaschierfolie oder über einen flächigen Auftrag oberhalb der Vertiefungen miteinander verbunden.

Ein Verfahren, welches die Eigenschaften geeigneter Kunststoffe mit Memory-Effekt besonders geschickt ausnutzt, sieht vor, dass Vertiefungen in der Kaschierfolie zunächst erzeugt, dann mit Klebstoff gefüllt und anschließend die Vertiefungen verflacht werden, so dass sich der Klebstoff aus den Vertiefungen erhebt und dadurch eine rasterförmige Struktur bildet.

Zum Verflachen der Vertiefungen wird die Kaschierfolie bevorzugt aktiv geheizt, vor allem mittels einer Anstrahlung mit zur Kaschierfolie ausgerichteten Wärmestrahlern.

Eine Bestrahlung mit Wärme sorgt bei geeigneten Kunststoffen mit Memory-Effekt zu einer Rückstellung gegenüber der ursprünglich gegossenen und verstreckten Form. Wenn also zunächst mit einer Prägewalze im erwärmten Zustand, beispielsweise mit einer direkt erwärmten Prägewalze, Vertiefungen in das Kaschierfolienband hineingebracht werden, dann kann ein Rückstellen der Vertiefung hin zu der wieder flachen oder zumindest flacheren Folienbahn einfach durch Bestrahlung mit Wärme erreicht werden.

Die Vertiefungen in der Kaschierfolie können über einen Memory-Effekt im Kunststoff ohne mechanische Einwirkung von außen verflacht werden. Alternativ können die Vertiefungen in der Kaschierfolie über eine mechanische Einwirkung von der A-Seite aus verflacht werden.

Unter Umständen kann es erstrebenswert sein, mittels einer Prägewalze, vor allem einer Narbwalze, eine überwiegende Fläche eines Nutzens mit einer Oberflächenstruktur zu versehen, dabei aber einen Aussparbereich auszusparen, und im weiteren Verlauf den Nutzen mit Klebstoff zu versehen, dabei aber den Aussparbereich auszusparen, und zwar in einem designierten Abfallbereich und/oder in einem designierten Ausstanzbereich und/oder in einer Kaschierfolie für eine Türseitenverkleidung.

Solche Merkmale sind vor allem dann von großem Vorteil, wenn das Verfahren in einem Verfahren zum Herstellen eines kaschierten Formteils eingesetzt wird.

Die besonders angestrebte Eignung eines Verfahrens wie vorstehend beschrieben findet sich in der Verwendung zum Herstellen eines Kraftfahrzeug-Innenverkleidungsteils. Nach einem siebten Aspekt der vorliegenden Erfindung löst die gestellte Aufgabe eine Anlage zum Kaschieren eines Trägerteils mit einer Kaschierfolie sowie mit einer Station zum Auftragen von Klebstoff zum Halten der Kaschierfolie auf dem Trägerteil, wobei die Anlage zum Durchführen eines Verfahrens wie vorstehend beschrieben eingerichtet ist.

Als die "Station" ist ein Werkzeug aufzufassen, welches zum Auftragen des Klebstoffs eingerichtet ist, wobei diese Station zum Teil aus herkömmlichen Komponenten zusammengesetzt sein kann wie beispielsweise einer Breitschlitzdüse zum Auftragen von Klebstoff auf die in einer Walzenstrecke vorbeigeführt werdende Kaschierfolienbahn.

In einer bevorzugten Ausführungsform der Erfindung sind in einer Maschinenrichtung, somit also in der designierten Durchlaufrichtung der Kaschierfolie durch die Anlage, zunächst eine Prägestation für die Kaschierfolie und erst später, unmittelbar oder mittelbar anschließend, die Station zum Auftragen von Klebstoff angeordnet sind.

Von besonderem Vorteil ist dies deshalb, weil beim Auftragen des Klebstoffs auf die Kaschierfolie mechanisch von der bereits geprägten Oberfläche der Kaschierfolie an ihrer B-Seite Gebrauch gemacht werden kann. So ist es beispielsweise denkbar, die geprägte B-Seite der Kaschierfolie zum lokalen Changieren des Austrittswiderstands einer an sich bekannten Breitschlitzdüse einzusetzen, so dass die geprägte Oberfläche an der B-Seite der Kaschierfolie zu einem makroskopisch strukturierten, gerasterten Klebstoffauftrag auf der Kaschierfolie führt. Dabei können die eingeprägten Vertiefungen und die dazwischen verbliebenen nicht vertieften Bereiche entweder positiv oder negativ das spätere Klebstoff- und somit Kanalbild vorgeben.

Wenn die Prägestation eine Umlenkwalze mit einer rasterförmig strukturierten Oberfläche aufweist, dann kann der in der Walzenstrecke ohnehin herrschende Zug einfach dazu eingesetzt werden, die Prägung in die Oberfläche der B-Seite der Kaschierfolie und/oder des Klebstoffs einzuprägen.

Als die "rasterförmig strukturierte Oberfläche" sei - genau wie bei der Betrachtung der geprägten Kaschierfolie - eine Struktur betrachtet, welche makroskopisch zu einer Prägung führt. Produktionstechnisch notwendige oder aus Wirtschaftlichkeitsgründen nur tolerierte, mikroskopische Strukturierungen seien darunter nicht zu verstehen. Vielmehr muss die Struktur sowohl an der Prägewalze als auch in der Kaschierfolie und/oder zumindest im Klebstoff eine Kanalstruktur von einer solchen Größe, also Breite und Tiefe, erzeugen, dass die Kanäle in der eingangs beschriebenen Weise zum Leiten von Luft in Folge von Unterdruck oder Überdruck dienen können.

Um mit möglichst geringer Kraftausübung das Prägen zu ermöglichen, wird vorgeschlagen, dass die Prägestation eine temperierte Walze aufweist.

Eine Walze ist dann "temperiert", wenn sie eine Ansteuerung, bevorzugt eine Regelung, zur Erhöhung der Temperatur gegenüber der Umgebungsluft aufweist. Insbesondere sei an eine elektrische Kontaktheizung, eine über Laserstrahlen arbeitende Heizung oder eine sonstige Strahlungsheizung gedacht. Die Heizung soll bevorzugt im Inneren der Walze angeordnet sein, so dass die Oberfläche der Walze, also derjenige Bereich, der mit der umlaufenden Kaschierfolie in Kontakt kommt, temperiert werden kann, ohne dass auf den Bahnlauf Einfluss genommen werden müsste.

Durch die Temperierung ist es bei geeigneter Einstellung der Anlage möglich, eine Prägung in die Kaschierfolie einzubringen, die bei erneuter Temperierung über den Memory-Effekt eines Kunststoffs zu einer Rückverformung der Kaschierfolie führt, wobei hier vorliegend das Rückverformen des Kunststoffs zu einer Umlagerung und Strukturgebung des Klebstoffs genutzt werden kann.

Die Station zum Auftragen von Klebstoff kann eine Breitschlitzdüse mit einer Klebstoffzuführung aufweisen.

Insbesondere sei an eine aus dem Stand der Technik bekannte Station zum Auftragen von Klebstoff gedacht, bei welcher eine Breitschlitzdüse der designierten Transportbahn der Kaschierfolie präzise zugestellt werden kann, so dass die Breitschlitzdüse dazu eingerichtet ist, eine gleichmäßige Klebstoffbeschichtung auf die vorbeilaufende Folie aufzutragen.

Mittels einer Modifikation der Folienbahn und/oder der Breitschlitzdüse kann diese Funktionalität für den hier erforderlichen lokal changierenden Klebstoffauftrag umfunktioniert werden.

Es sei ausdrücklich darauf hingewiesen, dass der Klebstoffauftrag und/oder ein Umformen des Klebstoffs nicht zwingend an einem rotatorischen Werkzeug und somit an der darum umlaufenden Folie erfolgen muss. Vielmehr kann es sich auch um eine stationäre Auftragung und/oder Umformung handeln, oder ein entsprechendes Werkzeug kann mit der Folie mitbewegt werden.

Für eine Breitschlitzdüse ist bevorzugt eine Abstandseinstellung zwischen einem Austritt der Breitschlitzdüse und einer designierten Bahn der Kaschierfolie vorgesehen.

Dadurch kann auf einfache Weise die Menge des austretenden Klebstoffs variiert werden: Ist der Abstand größer, so tritt eine größere Menge Klebstoff aus; ist der Abstand hingegen geringer, so tritt eine geringere Menge an Klebstoff aus. Ist der Abstand null oder praktisch null, so wird nur ein sehr dünner Film an Klebstoff oder nicht einmal eine durchgehende Fläche von Klebstoff an den Bereichen austreten, die gerade von der vorbeilaufenden Folienbahn an der Breitschlitzdüse versperrt gehalten wird.

Unabhängig davon kann das Zusammenspiel aus Austrittsdruck des Klebstoffs und Abstand zwischen der Düse und der Kaschierfolie auch dazu eingesetzt werden, nur nicht vertiefte Bereiche oder zumindest im Wesentlichen nur nicht vertiefte Bereiche mit dem Klebstoff flächig zu versehen, wobei der Klebstoff also entweder gar nicht oder zumindest im Wesentlichen nicht in die vertieften Bereiche hineingeht. Eine solche Beaufschlagung der Kaschierfolie mit Klebstoff hat sich bei jüngsten Prototypenversuchen des Erfinders als besonders leicht einstellbar erwiesen. Der Austritt des Klebstoffs aus der Düse kann dazu bevorzugt drucklos erfolgen.

Es wird vorgeschlagen, dass nach der Station zum Auftragen von Klebstoff und vor einer Aufbringstation der mit Klebstoff versehenen Kaschierfolie auf das Trägerteil eine Vertiefungsabflachstation angeordnet ist.

Die Vertiefungsabflachstation soll dazu eingerichtet sein, in die Kaschierfolie eingeprägte Vertiefungen abzuflachen, das heißt entweder vollständig zu eliminieren oder zumindest zum Teil, vor allem überwiegend, zu eliminieren. In einem einfachen Fall wird über einen mechanischen Angriff von der A-Seite oder der B-Seite der Kaschierfolie eine Rückstellung der geprägten Vertiefungen bewirkt, beispielsweise über eine Ansaugung der vertieften Oberfläche von der B-Seite aus oder über eine Drucklufteinwirkung gegen die vertiefte Stelle von der A-Seite aus die Rückstellung vorgenommen werden oder zumindest unterstützt werden.

Bei ausreichender Wärme in der B-Seite der Kaschierfolie während des Einprägens der makroskopischen Struktur können Vertiefungen dergestalt eingebracht werden, dass die Tiefe der Vertiefungen auf der B-Seite geringer ist als eine etwaige Erhöhung auf der A-Seite.

Bevorzugt wird das Einbringen von Vertiefungen auf der B-Seite jedoch so vorgenommen, dass sich auf der A-Seite keine Erhöhungen ergeben. Dazu kann beispielsweise dem die Vertiefung einprägenden Werkzeug gegenübergestellt eine Halteeinrichtung vorgesehen sein, beispielsweise eine glattflächige Andrückwalze.

Nach einem weiteren Aspekt der Erfindung löst die gestellte Aufgabe ein Verfahren zum Umrüsten einer Anlage mit einer Breitschlitzdüse zum Auftragen von Klebstoff auf eine entlanglaufende Kaschierfolie zum Herstellen eines kaschierten Formteils, mit dem folgenden Schritt: Einsetzen einer Einrichtung zum Herstellen eines rasterförmigen Strukturmusters an einer B-Seite der Kaschierfolie, und zwar auf dem Weg vom Einbringen der Kaschierfolie hin zur Breitschlitzdüse.

Es versteht sich, dass eine bestehende Anlage unter Verwendung der hier vorgestellten Erfindung leicht umgerüstet werden kann: Die vorhandene Walzenstrecke kann ebenso weiterhin benutzt werden wie eine bereits vorhandene Breitschlitzdüse zum Auftragen von Klebstoff. Es muss lediglich irgendwo in der Anlage, nach dem Einspeisen der Kaschierfolie in die Anlage und vor dem Klebstoffauftrag, aber auch jenseits des Klebstoffauftrags, die Einrichtung zum Herstellen der rasterförmigen Struktur an der Kaschierfolie installiert werden, beispielsweise durch Austausch eines bestehenden Bauteils wie vor allem einer Umlenkwalze.

Die vorliegende Erfindung betrifft nach weiteren Aspekten, die alternativ oder kumulativ zum Vorstehend Beschriebenen und/oder alternativ oder kumulativ zu den Patentansprüchen dieser Patentanmeldung auftreten können, folgende Punkte:
1. Ein Verfahren zur Herstellung eines kaschierten Formteils aus einem Bauteil (alternativ auch als Substrat bezeichnet) und einer Kaschierfolie (alternativ auch als Folie bezeichnet) welches dadurch gekennzeichnet ist, dass es folgende Schritte umfasst:
   - rasterförmiges Auftragen eines Klebstoffs auf die Oberfläche der Kaschierfolie und/oder des Bauteils, wobei durch das rasterförmige Auftragen des Klebstoffs auf der Oberfläche Kanäle ausgebildet werden,
   - zusammenfügen des Bauteils und der Kaschierfolie so, dass die Schicht des rasterförmig aufgetragenen Klebstoffs zwischen der Kaschierfolie und dem Bauteil angeordnet ist, und
   - Verbinden der Kaschierfolie mit dem Bauteil durch (a) Abziehen der zwischen Bauteil und Folie befindlichen Luft über die Kanäle durch Anlegen eines Unterdrucks oder (b) Herauspressen der zwischen Bauteil und Folie befindlichen Luft über die Kanäle durch Anlegen eines Pressdrucks, oder (c) eine Kombination aus (a) und (b).
2. Ein Verfahren gemäß Punkt 1, dadurch gekennzeichnet, dass das Verbinden der Kaschierfolie mit dem Bauteil durch Abziehen der zwischen Bauteil und Folie befindlichen Luft über die Kanäle mittels Anlegen eines Unterdrucks erfolgt.
3. Ein Verfahren gemäß einem der Punkte 1 oder 2, dadurch gekennzeichnet, dass in dem Bauteil mindestens ein Vakuumloch angeordnet ist, über das der Unterdruck angelegt wird.
4. Ein Verfahren gemäß einem oder mehreren der Punkte 1 bis 3, dadurch gekennzeichnet, dass der Klebstoff punktförmig oder streifenförmig 15 aufgetragen wird, vorzugsweise in Form von pyramidenstumpfförmigen, mehreckigen, rautenförmigen, rechteckigen, ovalen, L-förmigen, runden oder unregelmäßig geformten Klebstoffauftragungen, besonders bevorzugt in Form von pyramidenstumpfförmigen oder kegelstumpfförmigen Klebstoffauftragungen.
5. Ein Verfahren gemäß einem oder mehreren der Punkte 1 bis 4, dadurch gekennzeichnet, dass die Kanäle zwischen den Bereichen/Stellen der Klebstoffauftragung während des rasterförmigen Auftragens frei von Klebstoff bleiben.
6. Ein Verfahren gemäß einem oder mehreren der Punkte 1 bis 5, dadurch gekennzeichnet, dass die Kanäle bis zum Ende des Kaschierprozesses erhalten bleiben.
7. Ein Verfahren gemäß einem oder mehreren der Punkte 1 bis 6, dadurch gekennzeichnet, dass der Klebstoff in unregelmäßiger Anordnung oder Bereichen unregelmäßiger Anordnung aufgetragen wird.
8. Ein Verfahren gemäß einem oder mehreren der Punkte 1 bis 7, dadurch gekennzeichnet, dass die Klebstoffauftragungen in einem Abstand von 0,1 mm oder mehr und 10,0 mm oder weniger, vorzugsweise 0,3 mm oder mehr und 5,0 mm oder weniger, besonders bevorzugt 0,5 mm oder mehr und 4,0 mm oder weniger, ganz besonders bevorzugt 1,0 mm oder mehr und 3,5 mm oder weniger, insbesondere 1,5 mm oder mehr und 2,5 mm oder weniger angeordnet werden.
9. Ein Verfahren gemäß einem oder mehreren der Punkte 1 bis 8, dadurch gekennzeichnet, dass der Klebstoff ein reaktiver oder nicht-reaktiver 10 thermoplastischer Schmelzkleber ist, bevorzugt ein Schmelzkleber auf Basis von Ethylenvinylacetaten, Polyacrylaten, Copolyamiden, Copolyestern, Copolyethern, Polyolefinen, Polyurethanen und entsprechenden Co- und/oder Terpolymeren.
10. Ein Verfahren gemäß einem oder mehreren der Punkte 1 bis 9, dadurch gekennzeichnet, dass der Klebstoff ein latent reaktives, zwei- oder mehrkomponentiges System ist, bei dem die Reaktionskomponenten als homogene Mischung oder als Rasterpunkte nebeneinander oder übereinander aufgetragen werden.
11. Ein Verfahren gemäß einem oder mehreren der Punkte 1 bis 10, dadurch gekennzeichnet, dass die Kaschierfolie eine Kunststofffolie ist, vorzugsweise eine Kunststofffolie auf Basis von Polyvinylchlorid (PVC), Polyolefinen, thermoplastischen Polyolefinen (TPO), Polycarbonat, Polyether, Polyestern, Polyurethanen, Poly(meth)acrylat, oder Kombinationen, Co- oder Terpolymeren derselben.
12. Verfahren gemäß einem oder mehreren der Punkte 1 bis 11, dadurch gekennzeichnet, dass die Kaschierfolie eine Dicke im Bereich von 0,1 mm oder mehr und 7,0 mm oder weniger, vorzugsweise 1,0 mm oder mehr und 3,5 mm oder weniger, noch bevorzugter 1,5 mm oder mehr und 2,5 mm oder weniger aufweist.
13. Ein Verfahren gemäß einem oder mehreren der Punkte 1 bis 12, dadurch gekennzeichnet, dass das Bauteil aus einem luftundurchlässigen oder begrenzt luftdurchlässigen Material besteht.
14. Ein Verfahren gemäß einem oder mehreren der Punkte 1 bis 13, dadurch gekennzeichnet, dass das Bauteil formstabil ist.
15. Ein Verfahren gemäß einem oder mehreren der Punkte 1 bis 14, dadurch gekennzeichnet, dass das Bauteil aus einem Material besteht, das ausgewählt ist aus Kunststoff-Spritzguss aus Acrylnitril-Butadienstyrol (ABS), Polycarbonat-ABS (PCABS), Polypropylen (PP), Polycarbonat (PC), thermoplastischem Polyolefin (TPO), Faserverbundwerkstoffe umfassend Naturfaser-PP, Glasfasern, Carbonfasern, Kunststofffasern, mineralischen Füllstoffen, Bindemittel-PP, Polyurethan, Phenolharz oder Kombinationen derselben.
16. Ein Verfahren gemäß einem oder mehreren der Punkte 1 bis 15, dadurch gekennzeichnet, dass das Bauteil keine Kaschiernarbung aufweist.
17. Ein Verfahren gemäß einem oder mehreren der Punkte 1 bis 16, dadurch gekennzeichnet, dass die mit Klebstoff beschichtete Kaschierfolie vor und/oder während des Verbindens mit dem Bauteil erhitzt wird.
18. Ein Verfahren gemäß einem oder mehreren der Punkte 1 bis 17, dadurch gekennzeichnet, dass das kaschierte Formteil eine Fahrzeuginnenverkleidung oder ein Teil einer Fahrzeuginnenverkleidung ist.
19. Ein kaschiertes Formteil, insbesondere eine Fahrzeuginnenverkleidung oder ein Teil einer Fahrzeuginnenverkleidung, hergestellt nach einem Verfahren gemäß einem oder mehreren der vorangehenden Punkte.
20. Die Verwendung eines zwischen einem Bauteil und einer Kaschierfolie angeordneten Klebstoffrasters zur Reduzierung oder Vermeidung von Lufteinschlüssen bei der Kaschierung des Bauteils mit der Kaschierfolie.
21. Die Verwendung gemäß Punkt 20 , dadurch gekennzeichnet, dass
   - der Klebstoff auf die Oberfläche der Kaschierfolie und/oder des Bauteils rasterförmig aufgetragen wird, wobei durch das rasterförmige Auftragen des Klebstoffs auf der Oberfläche Kanäle ausgebildet werden,
   - das Bauteils und die Kaschierfolie so zusammengefügt werden, dass die Schicht des rasterförmig aufgetragenen Klebstoffs zwischen der Kaschierfolie und dem Bauteil angeordnet ist, und
   - die Kaschierfolie mit dem Bauteil durch (a) Abziehen der zwischen Bauteil
   und Folie befindlichen Luft über die Kanäle durch Anlegen eines Unterdrucks oder (b) Herauspressen der zwischen Bauteil und Folie befindlichen Luft über die Kanäle durch Anlegen eines Pressdrucks, oder (c) eine Kombination aus
   (a) und (b) verbunden (kaschiert) wird.
22. Die Verwendung gemäß einem der Punkte 20 oder 21, dadurch gekennzeichnet, dass der Klebstoff punktförmig oder streifenförmig auf die Kaschierfolie aufgetragen wird, vorzugsweise in Form von rechteckigen, mehreckigen, rautenförmigen, runden oder unregelmäßig geformten Klebstoffauftragungen, besonders bevorzugt in Form von pyramidenstumpfförmigen oder kegelstumpfförmigen Klebstoffauftragungen.
23. Die Verwendung gemäß einem oder mehreren der Punkte 20 bis 22, dadurch gekennzeichnet, dass die Kaschierung eine Vakuumkaschierung, ein In-Mould-Grain (IMG)-Verfahren, eine Presskaschierung oder Mischformen derselben umfasst.
24. Verwendung des kaschierten Formteils nach Punkt 19 als Fahrzeuginnenverkleidung oder als Teil einer Fahrzeuginnenverkleidung.

Neben den Verfahrens- und Verwendungsaspekten wie vorstehend beschrieben erstreckt sich die vorliegende Erfindung auch auf ein kaschiertes Formteil, insbesondere eine Fahrzeuginnenverkleidung oder ein Teil einer Fahrzeuginnenverkleidung, welches nach dem erfindungsgemäßen Verfahren erhältlich ist.

Darüber hinaus betrifft die vorliegende Erfindung auch die Verwendung eines zwischen einem Bauteil und einer Kaschierfolie angeordneten Klebstoffrasters zur Reduzierung oder Vermeidung von Lufteinschlüssen bei der Kaschierung des Bauteils mit der Kaschierfolie.

Die Kaschierung umfasst bevorzugt eine Vakuumkaschierung, ein In-Mould-Graining-(IMG)-Verfahren, eine Presskaschierung oder Mischformen derselben.

Die Erfindung wird nachstehend anhand verschiedener Ausführungsbeispiele unter Bezugnahme auf die Zeichnung näher erläutert. In der Zeichnung zeigen
- Figur 1: schematisch eine Draufsicht auf eine Folie mit strukturiert aufgetragenem Hotmelt,
- Figur 2: eine Seitenansicht aus Figur 1 gemäß dortiger Kennzeichnung II-II,
- Figur 3: einen Schnitt analog zu Figur 2, jedoch auf einem Trägerteil in einem Werkzeug,
- Figur 4: schematisch einen Längsschnitt durch eine Kaschierfolie in einer Station zum Abflachen von Vertiefungen in der Kaschierfolie,
- Figur 5: schematisch in perspektivischer Ansicht eine Prägewalze zum Umsetzen der Erfindung,
- Figur 6: schematisch in einer Draufsicht eine Walzenstrecke unter Verwendung der Walze aus Figur 5,
- Figur 7: schematisch im Längsschnitt eine Folie mit geprägten Mulden,
- Figur 8: in analoger schematischer Schnittansicht wie Figur 6 die geprägten Mulden mit Klebstoff befüllt,
- Figur 9: schematisch in einer seitlichen Ansicht eine Walzenstrecke,
- Figur 10a: schematisch in einem Querschnitt eine Narbwalze,
- Figur 10b: die Narbwalze aus Figur 10a in schematischer perspektivischer Ansicht sowie
- Figur 11: schematisch eine Draufsicht auf eine Anlage unter Verwendung der Narbwalze aus den Figuren 10a und 10b.

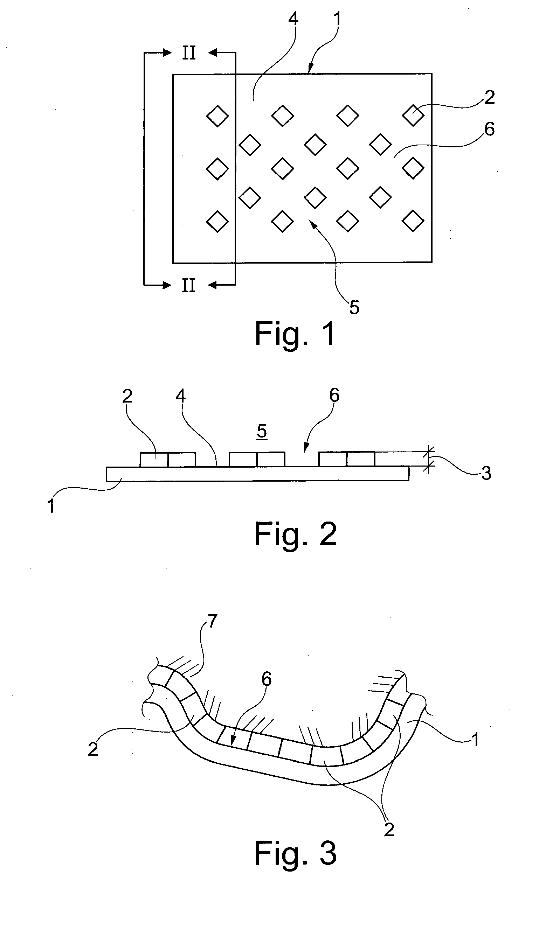

Die Kaschierfolie 1 in Figur 1 besteht aus einer im Wesentlichen zweidimensionalen Kunststofffolie, welche dazu vorgesehen ist, ein Innenverkleidungsteil für ein Kraftfahrzeug zur Benutzerseite hin zu verkleiden und dazu auf ein Trägerteil mit der in Figur 1 sichtbaren B-Seite aufkaschiert zu werden.

Zum Herstellen der Verbindung ist ein Hotmelt auf die Kaschierfolie 1 aufgetragen, und zwar in einer Vielzahl von Rauten 2 (exemplarisch beziffert). Jede Raute 2 hat eine Höhe 3, mit welcher sie sich über eine Oberfläche 4 der B-Seite 5 der Kaschierfolie 1 erhebt.

Zwischen den Rauten 2 ist ein miteinander komplett verbundenes Kanalsystem 6 erzeugt.

Wird die Kaschierfolie 1 nun in einem Werkzeug auf ein Trägerteil 7 aufkaschiert (vgl. Figur 3), so hält die Höhe 3 der Rauten 2 aus dem Hotmelt die offene verbundene Eigenschaft des Kanalsystems 6 aufrecht. Im Werkzeug kann die Luft seitlich abgezogen werden. Sie strömt durch die freien Querschnitte des Kanalsystems 6. Dabei zieht sich die Kaschierfolie 1 Schritt für Schritt immer weiter an das Trägerteil 7 heran, bis letztendlich ein direkter Formschluss stattfindet, wenn die Luft aus dem Kanalsystem 6 abgesaugt ist.

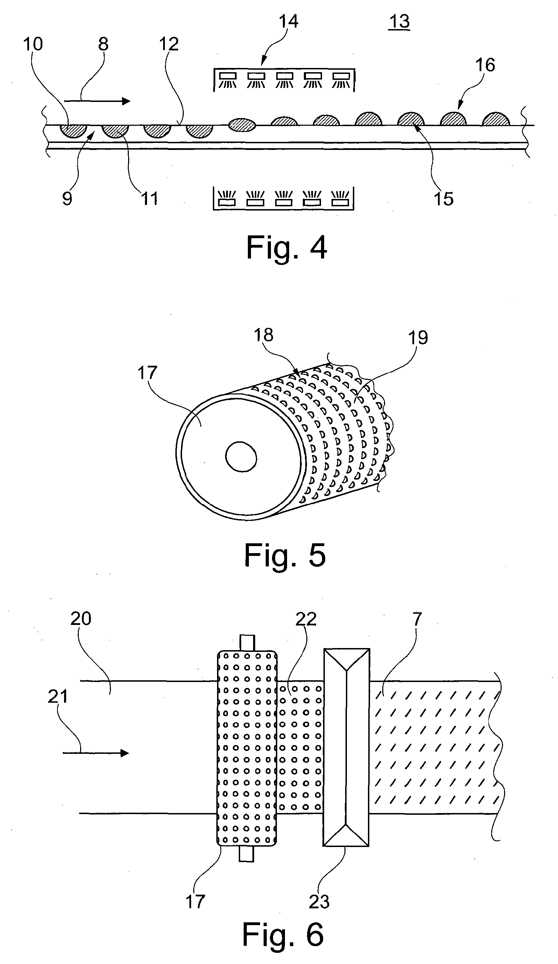

Eine bereits beschriebene Ausführungsform der Erfindung sieht vor, dass in die Kaschierfolie Vertiefungen eingebracht werden, dass Klebstoff in die Vertiefungen eingebracht wird, und dass in einem weiteren Schritt die Vertiefungen der Kaschierfolie abgeflacht werden, so dass der Kleber an die Oberfläche der Kaschierfolie tritt. Ein solches Beispiel findet sich in Figur 4 dargestellt:

Eine in Maschinenrichtung 8 zulaufende Kaschierfolie 9 weist eingeprägte makroskopische Mulden 10 (exemplarisch gekennzeichnet) auf, die mit einem Klebstoff 11 (exemplarisch beziffert) gefüllt sind.

Jede Mulde 10 nimmt einen Tropfen Klebstoff 11 auf.

An einer Oberfläche 12 zu einer B-Seite 13 hin ist der Klebstoff 11 mit der Oberfläche 12 zwischen den Mulden 10 flächig und bündig abschließend.

In der Maschinenrichtung 8 wird die Kaschierfolie 9 durch eine Station mit zwei Strahlungsheizungen 14 (exemplarisch beziffert) geführt, was zu einem Erwärmen der Kaschierfolie 9 führt.

Ein Memory-Effekt im Kunststoff der Kaschierfolie 9 führt dazu, dass sich im Bereich der Strahlungsheizungen 14 die Mulden 10 zurückbilden und wieder flächig mit der Oberfläche 12 der Kaschierfolie 9 werden. Dabei hebt der sich im Memory-Effekt rückstellende Kunststoff der Kaschierfolie 9 den Klebstoff 11 aus den Mulden 10 heraus, so dass der Kleber letztlich in Tropfen 15 von der Folienoberfläche hervorsteht und sich zwischen den Tropfen 15 ein offenes, verbundenes Kanalsystem 16 (exemplarisch beziffert) bildet.

Mit anderen Formen wird die Folie vor dem Thermoformen beheizt. Durch das Heizen der Folie stellen sich die geprägten und mit Kleber gefüllten Mulden zurück. Die Folie wird wieder glatt. Der Klebstoff, der in den Mulden war, wird zur überhöhten Kleberstruktur auf der Folie.

Die Prägewalze 17 in den Figuren 5 und 6 besteht im Wesentlichen aus einer herkömmlichen Umlenkwalze, wobei an einer Mantelfläche 18 eine Vielzahl makroskopisch strukturierter Erhebungen 19 (exemplarisch beziffert) angeordnet ist. Jede einzelne Erhebung 19 kann beispielsweise einen teilsphärischen Körper bilden.

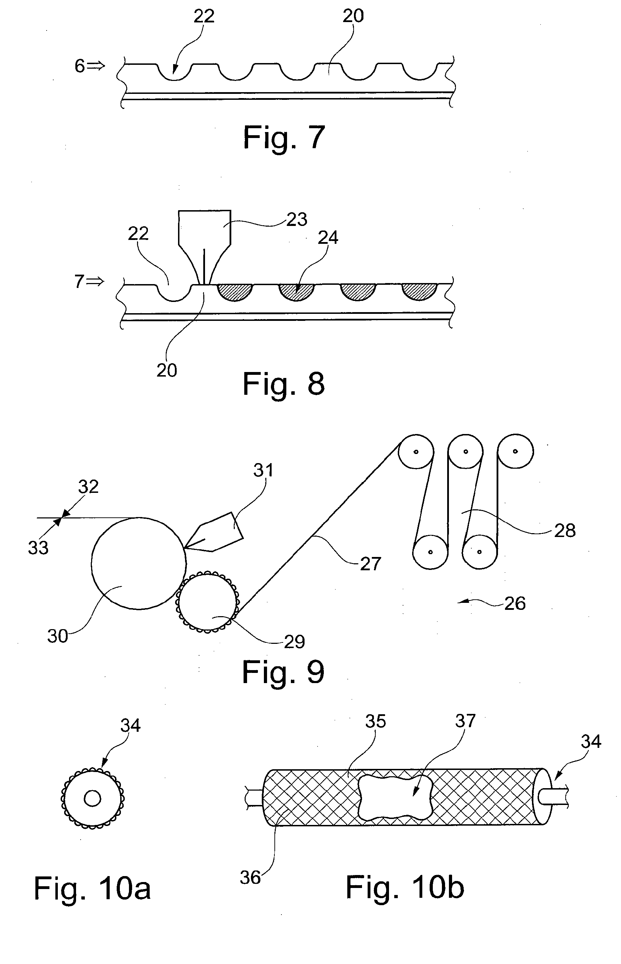

Läuft eine Kaschierfolie 20 in einer Maschinenrichtung 21 durch die Anlage, so wird sie um die Prägewalze 17 herum geführt und nimmt dort eine Vielzahl Mulden 22 (exemplarisch beziffert) an (vgl. auch Figur 7 und 8).

Anschließend wird die mit Mulden 22 versehene Kaschierfolie 20 an einer Breitschlitzdüse 23 mit minimalem Abstand entlang geführt. Aus der Breitschlitzdüse 23 tritt während des Prozesses Heißklebstoff aus. Dadurch, dass die Oberfläche der Kaschierfolie 20 zwischen den Mulden 22 unmittelbar an der Öffnung der Breitschlitzdüse 23 entlang streift, wobei im Idealfall keine Berührung stattfindet, tritt Klebstoff 24 nur oder zumindest überwiegend in die Mulden 22 aus.

Eine mögliche Walzenstrecke 25 für eine Anlage zum Kaschieren von Trägerteilen mit Kaschierfolien ist in Figur 9 gezeigt: In einer Maschinenrichtung 26 läuft eine Kaschierfolie 27 zunächst in einen Folienspeicher 28 mit Tänzerwalzen ein. Nach dem Folienspeicher 28 läuft die Kaschierfolie 27 weiter und um eine temperierte Prägewalze 29 um etwa 180 °C um. Die Prägewalze 29 übergibt die Kaschierfolie 27 in Laufrichtung direkt an eine Andrückwalze 30, welche auf der Folienumlaufseite eine Breitschlitzdüse 31 zum Auftragen von Klebstoff (nicht dargestellt) aufweist.

Eine B-Seite 32 kann daher mit Mulden und Klebstoff bestückt werden, wohingegen eine A-Seite 33 unangetastet bleiben kann.

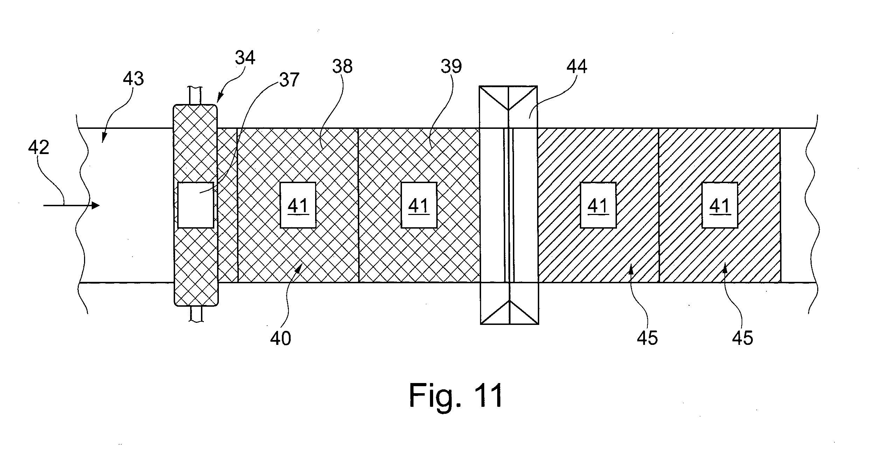

Die Ausführungsform der Narbwalze 34 in den Figuren 10a, 10b und 11 trägt auf ihrem Mantel 35 einen überwiegenden Bereich mit einer Narbenstruktur 36, der bevorzugt einem natürlichen Leder nachempfunden ist.

Ein Bereich von mehreren cm² Größe weist jedoch eine Aussparung 37 auf, die nicht genarbt ist. In der Produktion kann eine solche Narbwalze 34 deshalb Einzelnutzen 38, 39 (exemplarisch beziffert) erzeugen, die jeweils einen großen genarbten Bereich 40 aufweisen, aber ebenfalls einen nicht genarbten Bereich 41 weiter in einer Maschinenrichtung 42 durchläuft die Kaschierfolie 43 dann eine Station mit einer Breitschlitzdüse 44, in welcher ein Klebeauftrag vorgenommen wird. Dies führt bei geeigneter Einstellung zu einem größeren, ersten Bereich 45 an jedem Einzelnutzen 38, 39 mit aufgetragenem Kleber, hingegen aber auch zu einem nicht mit Kleber versehenen nicht genarbten Bereich 41.

Mit dieser speziellen Ausführung der Walze können Kleberbereiche ausgespart werden. Anwendungsbereiche finden sich beispielsweise in der Klebereinsparung in beispielsweise Abfallbereichen. Bei einigen Türseitenverkleidungen werden Folienteilbereiche nach dem Kaschieren ausgestanzt. Wenn sich unter diesen Bereichen kein Kleber befindet, dann kann der ausgestanzte Zuschnitt zudem leichter entfernt werden.

Ausdrücklich sei erwähnt, dass jüngste Versuche des Erfinders außerdem ergeben haben, dass es vorteilhaft sein kann, nur die Erhöhungen an einer geprägten Kaschierfolie mit Klebstoff zu versehen, also die nicht vertieften Bereiche. Die vertieften Teller können anschließend wieder hochkommen, müssen dies aber nicht, und bilden in jedem Fall die Kanäle.

Die Prägewalze kann beispielsweise ein Kanalmuster umfassen.

Alternativ lässt sich vorstellen, eine Rakel über ein Gitter zu ziehen, wobei dadurch der Klebstoff in der gewünschten makroskopisch strukturierten Form aufgebracht wird.

### Beschreibung der fotografischen Abbildungen

Das Foto 1 zeigt die nach dem Erhitzen und Abkühlen noch vorhandene Tropfenstruktur der Klebstoffauftragung.

Das Foto 2 zeigt ein Beispiel der Klebstoffstruktur nach dem Ablösen der Folie vom Bauteil.

Die Abbildung 1 zeigt die nach dem Erhitzen und Abkühlen noch vorhandene Tropfenstruktur des Klebstoffauftrages zwischen der Folie und dem Bauteil.

In einer bevorzugten Ausführungsform ist der Klebstoff ein reaktiver oder nicht-reaktiver thermoplastischer Schmelzklebstoff, besonders bevorzugt ein Schmelzklebstoff auf Basis von Ethylenvinylacetaten, Polyacrylaten, Copolyamiden, Copolyestern, Copolyethern, Polyolefinen, Polyurethanen und entsprechenden Co- und/oderTerpolymeren.

In einer besonders bevorzugten Ausführungsform der vorliegenden Erfindung sind die Bauteile Innenausstattungskomponenten von Fahrzeugen. Solche Komponenten bestehen insbesondere aus Materialien auf der Basis von naturfaserverstärkten Polymerwerkstoffen, beispielsweise ein Naturfaser-, beispielsweise ein Flachs-Polypropylen-Material, Naturfaser-, beispielsweise ein (Flachs)-PUR oder ein Naturfaser-, beispielsweise (Flachs)-Epoxidharz-Material, sowie auch ein im Spritzguss-Verfahren hergestellter Träger aus Polypropylen (PP), Styrol-Isopren-Styrol-Copolymer (ABS), Polycarbonat-ABS (PCABS), Polycarbonat (PC), thermoplastischem Polyurethan (TPU), thermoplastischem Polyolefin (TPO) oder Polyamid umfasst. Diese Materialien sind im Automobilbau weit verbreitet und daher dem Fachmann bestens bekannt.

Die Abbildung 2 zeigt ein Beispiel einer Klebstoffstruktur nach dem Ablösen der Folie vom Bauteil. Die hell glänzenden Kanäle, die ein gleichmäßiges Entfernen der zwischen dem Bauteil und der Folie befindlichen Luft ermöglicht haben, sind vollständig erhalten.

Anhand von Bauteilen mit ausgewählter Geometrie und Lochpositionierung zeigte sich, dass ein ausreichender Lufttransport innerhalb des Klebstoffrasters über Entfernungen von mehr als 10 cm vom nächsten Loch, und auch über kritische Bereiche, wie Kanten und Radien, hinweg gewährleistet ist.

Weiterhin hat sich herausgestellt, dass eine weitaus geringere Anzahl an Vakuumlöchern notwendig ist, als dies in der aktuellen Praxis erforderlich ist. Besonders bewährt haben sich dabei längliche Lochformen (z.B. Langlöcher), deren Länge die des Gravurrasters überschreitet. Damit ist sichergestellt, dass ein Loch nicht von einem einzelnen Klebstoffpunkt verschlossen werden kann und immer ein Kontakt zwischen Loch und einem dem Kanalsystem im Klebstoffraster besteht.

Vergleichsversuche mit einem klassischen glatten (d.h. nicht rasterförmigen) Walzenauftrag mit gleicher Klebstoffmenge zeigen auf ungenarbten Oberflächen keinerlei horizontalen Lufttransport. Lediglich in Bereichen, in denen die Folie aufgrund der Bauteilgeometrie und Dynamik des Kaschierprozesses praktisch auf das Bauteil "abgerollt" wird, sind keine Lufteinschlüsse erkennbar. Insbesondere zeigen alle Flächen, auch bei einer Vielzahl von Löchern, bei circa 20 bis 80 % der Fläche auf Lufteinschlüsse zurückzuführende fehlende Benetzung und Verklebung. Auch Vergleichsversuche ohne Klebstoff zeigen praktisch keinen horizontalen Lufttransport. Die weiche Folie dichtet unmittelbar auf dem glatten Substrat ab.

Alle Parameterbestimmungen und Messungen wurden, soweit nicht anders angegeben, unter den für den Fachmann üblichen Standardbedingungen durchgeführt, d.h. zum Beispiel bei Raumtemperatur (21 °C +/- 1°C) und unter Atmosphärendruck (1 atm).

In den nachfolgenden Versuchen wurde ein nicht-reaktiver polyolefinbasierter Schmelzklebstoff der Jowat AG, Deutschland (Jowat-Toptherm® 238.30) verwendet.

Dieser wurde auf die Unterseite einer TPO Folie (Benecke-Kaliko/Deutschland, 2 mm Schaum mit 0,8 mm Deckschicht) mit Hilfe einer Gravurwalze der Firma Hardo (Deutschland) durch Walzenauftrag aufgetragen.

Ein tellerähnliches Bauteil (240 mm Durchmesser, 50 mm Tiefe) aus Polyoxymethylen (POM) ohne Narbung, mit Vakuumlöchern im Abstand von ca. 2 cm im äußeren Randbereich wurde mit der beschichteten Folie an einer Einzelplatz-Vakuumkaschieranlage der Firma KIEFEL (Deutschland) kaschiert, wobei die Unterseite der Folie auf 180 °C, die Oberseite auf 140 °C erhitzt wurde und die Folie in Längs- und Querrichtung um 5% verstreckt wurde. Anschließend wurde das kaschierte Bauteil auf Fehlstellen aufgrund von Lufteinschlüssen sowie auf die Größe der kaschierten Fläche (zur Einschätzung der Reichweite des Lufttransportes durch die Kanäle der Gravur) begutachtet.

### Liste der verwendeten Bezugszeichen

- 1: Kaschierfolie
- 2: Raute
- 3: Höhe
- 4: Oberfläche
- 5: B-Seite
- 6: Kanalsystem
- 7: Trägerteil
- 8: Maschinenrichtung
- 9: Kaschierfolie
- 10: Mulde
- 11: Klebstoff
- 12: Oberfläche
- 13: B-Seite
- 14: Strahlungsheizung
- 15: Tropfen
- 16: Kanalsystem
- 17: Prägewalze
- 18: Mantelfläche
- 19: Erhebung
- 20: Kaschierfolie
- 21: Maschinenrichtung
- 22: Mulde
- 23: Breitschlitzdüse
- 24: Klebstoff
- 25: Walzenstrecke
- 26: Maschinenrichtung
- 27: Kaschierfolie
- 28: Folienspeicher
- 29: Prägewalze
- 30: Andrückwalze
- 31: Breitschlitzdüse
- 32: B-Seite
- 33: A-Seite
- 34: Narbwalze
- 35: Mantel
- 36: Narbenstruktur
- 37: Aussparung
- 38: Einzelnutzen
- 39: Einzelnutzen
- 40: Genarbter Bereich
- 41: Nicht genarbter Bereich
- 42: Maschinenrichtung
- 43: Kaschierfolie
- 44: Breitschlitzdüse
- 45: Erster Bereich

## Patentansprüche

1. Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten
a. Auftragen des Klebstoffs auf die B-Seite; und
b. anschließendes Umformen des Klebstoffs durch Prägen eines Rasters in den Klebstoff, sodass mit dem Raster Kanäle gebildet werden, bevor der Klebstoff mit der Oberfläche des Trägerteils verbunden wird.

2. Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten
a. Einbringen von Vertiefungen in die B-Seite der Kaschierfolie, und
b. Einbringen des Klebstoffs in die Vertiefungen und/oder zwischen den Vertiefungen,
wobei die Reihenfolge dieser Schritte auch umgedreht sein kann.

3. Verfahren zum Versehen einer Kaschierfolie mit Klebstoff als vorbereitender Verfahrensschritt zum Herstellen eines kaschierten Formteils mittels eines Trägerteils, der Kaschierfolie und des Klebstoffs, wobei der Klebstoff die B-Seite der Kaschierfolie und eine Oberfläche des Trägerteils verbinden soll, mit den Schritten
a. Aufbringen des Klebstoffs durch eine Breitschlitzdüse,
b. wobei der Austritt des Klebstoffs durch die Breitschlitzdüse durch lokale Widerstände am Austritt gehindert und dadurch ein Raster geformt wird.

4. Verfahren zum Auftragen eines Hotmelts auf eine Kaschierfolie, und anschließend Aufkaschieren auf ein Trägerteil, wobei der Hotmelt strukturiert aufgebracht wird.

5. Verfahren nach Anspruch 4, dgd der Hotmelt zu Kanalbildungserhebungen strukturiert aufgebracht wird, sodass sich zwischen den Kanalbildungserhebungen Kanäle bilden, durch welche Luft die Folienoberfläche entlang gesaugt werden kann, wobei bevorzugt ein Rautenmuster erzeugt wird.

6. Verfahren, insbesondere einbindend ein Verfahren nach Anspruch 4 oder 5 als vorbereitenden Verfahrensschritt, zum Herstellen eines kaschierten Formteils mittels eines Trägerteils, einer Kaschierfolie und eines Klebstoffs, insbesondere eines Hotmelts, wobei der Klebstoff eine B-Seite der Kaschierfolie und eine Oberfläche des Trägerteils verbindet, mit den folgenden Schritten:
a. rasterförmiges Auftragen des Klebstoffs auf die B-Seite der Kaschierfolie und/oder auf die Oberfläche des Trägerteils, wobei durch das rasterförmige Auftragen des Klebstoffs Kanäle ausgebildet werden;
b. Zusammenfügen des Trägerteils und der Kaschierfolie so, dass die Schicht des rasterförmigen aufgetragenen Klebstoffs zwischen der Kaschierfolie und dem Trägerteil angeordnet ist; und
c. Verbinden der Kaschierfolie mit dem Trägerteil durch (i) Abziehen der zwischen Trägerteil und Kaschierfolie befindlichen Luft über die Kanäle durch Anlegen eines Unterdrucks und/oder durch (ii) Herauspressen der zwischen Trägerteil und Kaschierfolie befindlichen Luft über die Kanäle durch Anlegen eines Pressdrucks.
***dadurch gekennzeichnet, dass***
die Kaschierfolie von einer Rolle als Endlosfolie abgezogen wird
und/oder
der Klebstoff während des Umlaufs der Kaschierfolie um eine Walze aufgetragen wird
und/oder
der Klebstoff mittels einer Breitschlitzdüse auf die Kaschierfolie aufgetragen wird
und/oder
der Klebstoff in eine Vertiefung hinein aufgetragen wird.

7. Verfahren nach zwei, drei, vier, fünf oder sechs der vorstehenden Ansprüche.

8. Verfahren nach einem der vorstehenden Ansprüche, ***dadurch gekennzeichnet, dass*** die Kaschierfolie um eine Prägewalze geführt wird, wobei die Oberfläche der Prägewalze strukturierte Erhebungen aufweist und damit ein Kanalmuster zu prägen eingerichtet ist.

9. Verfahren nach einem der vorstehenden Ansprüche, ***dadurch gekennzeichnet, dass*** die Kaschierfolie um eine Prägewalze geführt wird, wobei die Oberfläche der Prägewalze strukturierte Erhebungen aufweist und damit eine Vielzahl von Vertiefungen in die Kaschierfolie einzuprägen eingerichtet ist.

10. Verfahren nach einem der vorstehenden Ansprüche, ***dadurch gekennzeichnet, dass*** die Kaschierfolie um eine Andrückwalze geführt wird, insbesondere nach einem Führen um eine Prägewalze, und während ihres Umlaufs um die Andrückwalze an einer Breitschlitzdüse entlang geführt wird.

11. Verfahren nach einem der vorstehenden Ansprüche, ***dadurch gekennzeichnet, dass*** der Klebstoff in in die Kaschierfolie eingebrachte makroskopische Vertiefungen eingebracht wird, bevorzugt oberflächenbündig mit der B-Seite der Kaschierfolie oder über einen flächigen Auftrag oberhalb der Vertiefungen miteinander verbunden.

12. Verfahren nach einem der vorstehenden Ansprüche, ***dadurch gekennzeichnet, dass*** Vertiefungen in der Kaschierfolie zunächst mit Klebstoff gefüllt und anschließend die Vertiefungen verflacht werden, sodass sich der Klebstoff aus den Vertiefungen erhebt und dadurch eine rasterförmige Struktur bildet.

13. Verfahren nach Anspruch 12, ***dadurch gekennzeichnet, dass*** zum Verflachen der Vertiefungen die Kaschierfolie aktiv geheizt wird, vor allem mittels einer Anstrahlung mit Wärmestrahlern.

14. Verfahren nach Anspruch 13, ***dadurch gekennzeichnet, dass*** die Vertiefungen in der Kaschierfolie über einen Memoryeffekt im Kunststoff ohne mechanische Einwirkung von außen verflacht werden.

15. Verfahren nach Anspruch 13, ***dadurch gekennzeichnet, dass*** die Vertiefungen in der Kaschierfolie über eine mechanische Einwirkung von der A-Seite aus verflacht werden.

16. Verfahren nach einem der vorstehenden Ansprüche, ***dadurch gekennzeichnet, dass*** mittels einer Prägewalze, vor allem einer Narbwalze, eine überwiegende Fläche eines Nutzens mit einer Oberflächenstruktur versehen wird, dabei aber ein Aussparbereich ausgespart wird, und im weiteren Verlauf der Nutzen mit Klebstoff versehen wird, dabei aber der Aussparbereich ausgespart wird, und zwar in einem designierten Abfallbereich und/oder in einem designierten Ausstanzbereich und/oder in einer Kaschierfolie für eine Türseitenverkleidung.

17. Verwendung eines Verfahrens nach einem der vorstehenden Ansprüche zum Herstellen eines Kraftfahrzeug-Innenverkleidungsteils.

18. Anlage zum Kaschieren eines Trägerteils mit einer Kaschierfolie sowie mit einer Station zum Auftragen von Klebstoff zum Halten der Kaschierfolie auf dem Trägerteil, wobei die Anlage zum Durchführen eines Verfahrens nach einem der vorstehenden Ansprüche eingerichtet ist.

19. Anlage nach Anspruch 18, ***dadurch gekennzeichnet, dass*** in einer Maschinenrichtung zunächst eine Prägestation und später die Station zum Auftragen von Klebstoff angeordnet sind.

20. Anlage nach Anspruch 19, ***dadurch gekennzeichnet, dass*** die Prägestation eine Umlenkwalze mit einer rasterförmig strukturierten Oberfläche aufweist.

21. Anlage nach Anspruch 19 oder 20, ***dadurch gekennzeichnet, dass*** die Prägestation eine temperierte Walze aufweist.

22. Anlage nach einem der Ansprüche 18 bis 21, ***dadurch gekennzeichnet, dass*** die Station zum Auftragen von Klebstoff eine Breitschlitzdüse mit einer Klebstoffzuführung aufweist.

23. Anlage nach Anspruch 22, ***dadurch gekennzeichnet, dass*** eine Abstandseinstellung zwischen einem Austritt der Breitschlitzdüse und einer designierten Bahn der Kaschierfolie vorgesehen ist.

24. Anlage nach einem der Ansprüche 18 bis 23, ***dadurch gekennzeichnet, dass*** nach der Station zum Auftragen von Klebstoff und vor einer Aufbringstation eine Vertiefungsabflachstation angeordnet ist.

25. Verfahren zum Umrüsten einer Anlage mit einer Breitschlitzdüse zum Auftragen von Klebstoff auf eine entlang laufende Kaschierfolie zum Herstellen eines kaschierten Formteils, mit dem folgenden Schritt: Einsetzen einer Einrichtung zum Herstellen einer rasterförmigen Struktur an einer B-Seite der Kaschierfolie, auf dem Weg vom Einbringen der Kaschierfolie zur Breitschlitzdüse.

26. Verfahren nach Anspruch 25, ***dadurch gekennzeichnet, dass*** die rasterförmige Struktur in die Kaschierfolie eingebracht wird.
